# FASCICULE DE BREVET EUROPEEN

(11) **EP 3 985 531 B1**
(45) Date de publication et mention de la délivrance du brevet: **04.09.2024**
(21) Numéro de dépôt: 21201389.0
(22) Date de dépôt: 07.10.2021
(51) Int. Cl.: G06F 21/32, G06F 21/34, H04L 9/08, H04L 9/32

(54) **ENRÔLEMENT BIOMÉTRIQUE AVEC VÉRIFICATION**
BIOMETRISCHE ERFASSUNG MIT ÜBERPRÜFUNG
BIOMETRIC ENROLMENT WITH VERIFICATION

(30) Priorité: 14.10.2020 FR 2010504
(43) Date de publication de la demande: 20.04.2022
(73) Titulaire: IDEMIA France, 92400 Courbevoie (FR)
(72) Inventeur: MARTIN-MARTINASSO, Ludovic, 92400 COURBEVOIE (FR); DEPRUN, Jean-François, 92400 COURBEVOIE (FR)
(74) Mandataire: Idemia

(56) Documents cités:
- WO-A1-2018/106430
- "Information technology -- Biometric performance testing and reporting -- Part 1: Principles and framework", ISO/IEC 19795-1:2006, IEC, 3, RUE DE VAREMBÉ, PO BOX 131, CH-1211 GENEVA 20, SWITZERLAND, 24 March 2006 (2006-03-24), pages 1 - 56, XP082002417
- FERNANDEZ-SAAVEDRA BELEN ET AL: "Small fingerprint scanners used in mobile devices: the impact on biometric performance", IET BIOMETRICS, IEEE, MICHAEL FARADAY HOUSE, SIX HILLS WAY, STEVENAGE, HERTS. SG1 2AY, UK, vol. 5, no. 1, 1 March 2016 (2016-03-01), pages 28 - 36, XP006076356, ISSN: 2047-4938, DOI: 10.1049/IET-BMT.2015.0018

## Description

### Domaine Technique

La présente invention se rapporte à l'authentification par empreinte biométrique, et concerne plus particulièrement un enrôlement mise en oeuvre par un dispositif électronique, tel qu'une carte à puce par exemple, pour permettre l'authentification biométrique ultérieure d'un utilisateur.

### Technique antérieure

De façon connue, une carte à puce peut utiliser des données biométriques pour authentifier un utilisateur, le résultat de cette authentification permettant par exemple de valider ou de rejeter une transaction mise en oeuvre par cette carte à puce. La vérification d'empreintes digitales permet par exemple d'authentifier de façon sécurisée l'utilisateur d'une carte à puce.

Ainsi, pour authentifier un utilisateur, une carte à puce peut faire l'acquisition d'une empreinte digitale au moyen d'un capteur d'empreinte digital quelconque et comparer cette empreinte avec un modèle d'empreinte de référence qui est préalablement généré et stocké dans une mémoire de la carte à puce au cours d'une étape initiale dite « d'enrôlement » (ou plus généralement « enrôlement biométrique »). En vérifiant si l'empreinte digitale acquise et le modèle d'empreinte de référence coïncide, la carte à puce peut ainsi déterminer si l'authentification est réussie ou échoue.

L'acquisition d'empreintes digitales peut être réalisée au moyen d'un capteur d'empreinte digitale dont est équipée la carte à puce, ou alternativement, au moyen d'un capteur d'empreinte digitale intégré dans un dispositif périphérique qui coopère avec la carte à puce pour réaliser l'acquisition d'empreinte digitale.

Pour que l'authentification digitale offre des résultats fiables, il est nécessaire que le modèle d'empreinte de référence préenregistré dans la carte à puce soit le plus fidèle possible vis-à-vis du ou des doigts de l'utilisateur. L'étape d'enrôlement au cours de laquelle l'utilisateur enregistre son empreinte est donc critique.

Dans le cas où la qualité du ou des modèles d'empreinte de référence acquis lors de l'enrôlement n'est pas satisfaisante, des erreurs sont susceptibles de se produire lors de l'authentification. Le processus d'authentification peut s'avérer laborieux ou aboutir à des résultats irréguliers, en fonction notamment des conditions et de la manière dans lesquelles l'acquisition des empreintes est réalisée.

Or, cette étape d'enrôlement n'est pas toujours bien maîtrisée par les utilisateurs et est source d'erreur. Une difficulté réside notamment du fait que les cartes à puce sont généralement dépourvues d'interface utilisateur ou sont au mieux équipées d'une interface utilisateur rudimentaire. Dans les cas où un étui est utilisé en couplage avec la carte à puce pour l'enrôlement, cet étui est généralement dépourvu d'interface utilisateur ou présente une interface utilisateur très rudimentaire. Une autre difficulté résulte en ce que l'enrôlement nécessite parfois l'acquisition de multiples empreintes digitales, ce qui rend les manipulations relativement complexes, notamment en l'absence d'une interface utilisateur plus élaborée. Dans le cas où l'enrôlement a échoué ou nécessite d'être répété, il est en général nécessaire que l'utilisateur se tourne vers l'émetteur de la carte afin que ce dernier réalise une procédure d'enrôlement spécifique, ce qui est cause de désagréments pour l'utilisateur.

Afin de pallier à ces difficultés, il a été envisagé de laisser la possibilité aux utilisateurs de répéter l'étape d'enrôlement plusieurs fois, si par exemple l'enrôlement n'a pas été réalisé correctement ou si les résultats lors de l'authentification ne sont pas satisfaisants. Cependant, la capacité des cartes à puce à réaliser plusieurs enrôlements dans le temps engendre une faille sécuritaire dans la mesure où un tiers malveillant pourrait être en mesure de modifier frauduleusement l'enrôlement réalisé au préalable par le titulaire de la carte.

Il existe donc un besoin pour une solution permettant un enrôlement biométrique fiable et aisé d'un utilisateur auprès d'un dispositif électronique (tel qu'une carte à puce par exemple), tout en maintenant un bon niveau de sécurité, afin de garantir des bons résultats lors de l'authentification biométrique et afin d'améliorer l'expérience de l'utilisateur. En particulier, il est nécessaire d'améliorer l'enrôlement digital réalisé sur une carte à puce ou sur un quelconque dispositif électronique, en vue de permettre une authentification biométrique ultérieure d'un utilisateur.

Le Standard ISO/IEC 19795-1:2006, "Information technology - Biométrie performance testing and reporting - Part 1 : Principles and framework" décrit une méthode d'authentification à partir de la similarité de caractéristiques biométriques distinctives obtenues par traitement de données biométriques. Le document WO/2018/106430 décrit des procédés d'enrôlement biométrique d'une carte à puce. L'article "Small Fingerprint Scanners Used In Mobile Devices : The Impact On Biométrie Performance", Fernandez-Saavedra Belen et Al., IET BIOMETRICS, IEEE, vol 5, n°1, pages 28-39 décrit une méthode dans laquelle des étapes d'enrôlement et d'authentification sont exécutées en utilisant un même capteur embarqué dans un terminal mobile.

### Exposé de l'invention

A cet effet, la présente invention concerne un procédé d'enrôlement biométrique mis en oeuvre dans une carte à puce comprenant un capteur biométrique, un module d'enrôlement et une mémoire, le procédé comprenant un processus itératif comprenant au cours d'au moins une itération courante :
- enrôlement biométrique par le module d'enrôlement mettant en oeuvre une fonction d'enrôlement biométrique, comprenant :
   ∘ acquisition d'au moins une première empreinte biométrique au moyen du capteur biométrique ; et
   ∘ enregistrement, en tant que données biométriques de référence, dans la mémoire, de premières données biométriques obtenues à partir de chaque première empreinte biométrique acquise ;
- vérification d'enrôlement biométrique, comprenant :
   ∘ acquisition d'au moins une deuxième empreinte biométrique au moyen du capteur biométrique ; et
   ∘ vérification de la validité des données biométriques de référence par comparaison avec des deuxièmes données biométriques obtenues à partir de chaque deuxième empreinte biométrique acquise ;
- si les données biométriques de référence sont déterminées comme étant valides, blocage du module d'enrôlement de sorte à inhiber la fonction d'enrôlement biométrique pour empêcher tout enrôlement biométrique ultérieur, les données biométriques de référence étant conservées dans la mémoire pour permettre ultérieurement une authentification biométrique ; et
- si au moins une partie des données biométriques de référence est déterminée comme n'étant pas valide, suppression d'au moins ladite partie non valide des données biométriques de référence et déclenchement d'un nouvel enrôlement biométrique pour remplacer les données biométriques supprimées par de nouvelles données biométriques obtenues à partir d'au moins une nouvelle empreinte biométrique.

La carte à puce peut coopérer avec un dispositif périphérique comprenant une source d'alimentation interne et une interface utilisateur, chaque enrôlement biométrique et chaque vérification d'enrôlement biométrique étant déclenchés sur détection d'un nouveau couplage de la carte à puce avec le dispositif périphérique.

Grâce à l'invention, un enrôlement biométrique fiable est possible même si le porteur échoue au moins partiellement l'enrôlement biométrique lors d'un ou de plusieurs premiers essais. La carte à puce est capable de vérifier si l'enrôlement biométrique réalisé est satisfaisant et adapte son état en conséquence pour permettre à l'utilisateur de répéter, au moins en partie, l'enrôlement. Ainsi, les erreurs ou problèmes éventuels rencontrés par le porteur lors de l'enrôlement biométrique n'impacte pas négativement son expérience d'utilisateur. En particulier, il n'est plus obligé de rapporter sa carte à puce à l'émetteur dans le cas où il a échoué l'enrôlement biométrique lors de son premier essai.

Cette flexibilité accrue lors du processus d'enrôlement biométrique ne se fait toutefois pas au détriment de la sécurité de la carte à puce puisque, dès lors que l'enrôlement biométrique est jugé satisfaisant par la carte, celle-ci bloque la fonction d'enrôlement biométrique afin d'empêcher tout nouvel enrôlement ultérieur. Il n'est ainsi pas possible pour un tiers malveillant par exemple de s'enrôler auprès de la carte à puce une fois que le porteur a achevé le processus d'enrôlement.

Selon un mode de réalisation particulier, la carte à puce est une carte de paiement EMV, un badge d'accès (mettant par exemple en oeuvre une fonction d'accès) ou un document électronique identitaire (mettant par exemple en oeuvre une fonction d'authentification).

Selon un mode de réalisation particulier, le module d'enrôlement est apte à commuter depuis un état activé, dans lequel il met en oeuvre la fonction d'enrôlement biométrique pour réaliser un enrôlement biométrique, vers un état bloqué dans lequel ladite fonction d'enrôlement biométrique est bloquée.

Selon un mode de réalisation particulier, lors de la vérification d'enrôlement biométrique, les données biométriques de référence correspondant à chaque première empreinte biométrique sont comparées avec des deuxièmes données biométriques correspondant à une deuxième empreinte biométrique respective, dans lequel chaque partie des données biométriques de référence coïncidant avec une partie au moins des deuxièmes données biométriques est déterminée comme étant valide.

Selon un mode de réalisation particulier, le procédé comprend en outre, après le blocage du module d'enrôlement, une authentification biométrique comprenant :
- acquisition d'au moins une empreinte biométrique ultérieure au moyen du capteur biométrique ;
- obtention, pour chaque empreinte biométrique ultérieure, de données biométriques ultérieures respectives qui sont représentatives d'un utilisateur ; et
- vérification de ladite au moins une empreinte biométrique ultérieure par comparaison des données biométriques ultérieures avec les données biométriques de référence.

Selon un mode de réalisation particulier, si au moins une partie des données biométriques de référence est déterminée comme n'étant pas valide lors de ladite vérification d'enrôlement biométrique, toutes les données biométriques de référence sont supprimées et un nouvel enrôlement biométrique est déclenché au cours d'une nouvelle itération du processus itératif pour remplacer les données biométriques supprimées par de nouvelles données biométriques obtenues à partir d'au moins une nouvelle empreinte biométrique.

Selon un mode de réalisation particulier, si seulement une partie des données biométriques de référence est déterminée comme n'étant pas valide lors de ladite vérification d'enrôlement biométrique, la partie non valide des données biométriques de référence est supprimée de sorte à être remplacée lors d'un nouvel enrôlement biométrique au cours d'une nouvelle itération du processus itératif, tandis que la partie valide des données biométriques de référence est conservée dans la mémoire pour permettre ultérieurement une authentification biométrique.

Selon un mode de réalisation particulier, si une commande prédéfinie est reçue par la carte à puce après exécution de l'enrôlement biométriques mais avant achèvement d'au moins l'un parmi :
- la vérification d'enrôlement biométrique ; et
- ledit blocage du module d'enrôlement ;
alors la carte à puce supprime toutes les données biométriques de référence enregistrées dans la mémoire et déclenche un nouvel enrôlement biométrique au cours d'une nouvelle itération du processus itératif pour remplacer les données biométriques de référence supprimées par de nouvelles données biométriques obtenues à partir d'au moins une nouvelle empreinte biométrique.

Selon un mode de réalisation particulier, la commande prédéfinie est une quelconque commande ADPU pour traiter une transaction.

Selon un mode de réalisation particulier, la carte à puce comprend en outre :
- un module de traitement configuré pour réaliser l'enregistrement, en tant que données biométriques de référence, dans la mémoire, des premières données biométriques obtenues et pour réaliser la vérification de la validité des données biométriques de référence ; et
- un processeur, ledit processeur et le capteur biométrique étant extérieurs au module de traitement ;

chaque empreinte biométrique acquise au moyen du capteur biométrique étant traitée par le processeur pour obtenir des données biométriques correspondantes qui sont transmises au module de traitement ;
la vérification d'enrôlement biométrique étant réalisée par un module de vérification compris dans la carte à puce, le module de vérification vérifiant les données biométriques de référence de chaque première empreinte biométrique en réponse à une commande de vérification respective générée et envoyée par le processeur.

Selon un mode de réalisation particulier, le module de traitement est un élément sécurisé.

Selon un mode de réalisation particulier, le processus itératif est poursuivi tant que les données biométriques de référence enregistrées dans la mémoire n'ont pas été validées.

Selon un mode de réalisation, la vérification d'enrôlement biométrique est réalisée par le module de vérification indépendamment d'une quelconque commande provenant du dispositif périphérique.

Selon un mode de réalisation particulier, le processus itératif est terminé si N itérations ont été réalisées sans que les données de référence enregistrées dans la mémoire n'aient été déterminées comme étant valides, N étant un entier au moins égal à 2.

Selon un mode de réalisation particulier, si le processus itératif est terminé sur détection que N itérations ont été réalisées sans que les données de référence enregistrées dans la mémoire n'aient été déterminées comme étant valides, le procédé comprend en outre :
- modification de la configuration d'au moins une fonction mise en oeuvre par la carte à puce de sorte qu'au moins un paramètre configurant ladite au moins une fonction soit modifié.

Dans un mode particulier de réalisation, les différentes étapes du procédé d'enrôlement biométrique de l'invention sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif électronique tel qu'une carte à puce (ou un élément sécurisé dans une carte à puce), ou plus généralement dans un ordinateur, ce programme comportant des instructions adaptées à la mise en oeuvre des étapes d'un procédé d'enrôlement biométrique tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible ou ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Corrélativement, l'invention concerne une carte à puce configurée pour mettre en oeuvre le procédé d'enrôlement biométrique de l'invention. Plus particulièrement, l'invention vise une carte à puce comprenant :
- un capteur biométrique ;
- une mémoire ;
- un module d'enrôlement configuré pour réaliser un enrôlement biométrique mettant en oeuvre une fonction d'enrôlement biométrique (F1), le module d'enrôlement comprenant :
   ∘ acquisition d'au moins une première empreinte biométrique au moyen du capteur biométrique ; et
   ∘ enregistrement, en tant que données biométriques de référence, dans la mémoire, de premières données biométriques obtenues à partir de chaque première empreinte biométrique acquise ;
- un module de vérification configuré pour réaliser une vérification d'enrôlement biométrique comprenant :
   ∘ acquisition d'au moins une deuxième empreinte biométrique au moyen du capteur biométrique ; et
   ∘ vérification de la validité des données biométriques de référence par comparaison avec des deuxièmes données biométriques obtenues à partir de chaque deuxième empreinte biométrique acquise ;
- un module de contrôle configuré pour :
   ∘ si les données biométriques de référence sont déterminées comme étant valides, bloquer le module d'enrôlement de sorte à inhiber la fonction d'enrôlement biométrique pour empêcher tout enrôlement biométrique ultérieur, et conserver les données biométriques de référence dans la mémoire pour permettre ultérieurement une authentification biométrique ; et
   ∘ si au moins une partie des données biométriques de référence est déterminée comme n'étant pas valide, supprimer au moins ladite partie non valide des données biométriques de référence et déclencher un nouvel enrôlement biométrique pour remplacer les données biométriques supprimées par de nouvelles données biométriques obtenues à partir d'au moins une nouvelle empreinte biométrique,

Comme déjà indiqué, la carte à puce peut être configurée pour coopérer avec un dispositif périphérique comprenant une source d'alimentation interne et une interface utilisateur, chaque enrôlement biométrique et chaque vérification d'enrôlement biométrique étant déclenchés sur détection d'un nouveau couplage de la carte à puce avec le dispositif périphérique.

A noter que les différents modes de réalisation mentionnés ci-avant (ainsi que ceux décrits ci-après) en relation avec le procédé d'enrôlement biométrique de l'invention ainsi que les avantages associés s'appliquent de façon analogue à la carte à puce de l'invention.

Pour chaque étape (ou opération) du procédé d'enrôlement biométrique, la carte à puce de l'invention peut comprendre un module correspondant configuré pour réaliser ladite étape.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel peut être exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement une carte à puce selon un mode de réalisation particulier ;
[Fig. 2] La figure 2 représente schématiquement des modules mis en oeuvre par une carte à puce, selon un mode de réalisation particulier de l'invention ;
[Fig. 3] La figure 3 représente, sous forme d'un diagramme, les étapes d'un procédé d'enrôlement biométrique conforme à un mode de réalisation particulier de l'invention ;
[Fig. 4] La figure 4 représente schématiquement une carte à puce et un dispositif périphérique, selon un mode de réalisation particulier de l'invention ; et
[Fig. 5] La figure 5 représente, sous forme d'un diagramme, les étapes d'un procédé conforme à un mode de réalisation particulier de l'invention.

### Description des modes de réalisation

Comme indiqué ci-avant, l'invention se propose de mettre en oeuvre un enrôlement biométrique de l'utilisateur d'un dispositif électronique dans le but de permettre une authentification biométrique ultérieure de l'utilisateur auprès dudit dispositif.

Comme déjà expliqué, un enrôlement biométrique permet à un dispositif électronique d'acquérir au moins une empreinte biométrique qui sert de modèle de référence. Le dispositif détermine, à partir de cette dite au moins une empreinte biométrique, des données biométriques de référence qui sont enregistrées en vue d'être utilisées ultérieurement pour authentifier un utilisateur auprès du dispositif électronique. Une authentification biométrique peut ainsi être réalisée en comparant des données biométriques obtenues à partir d'au moins une empreinte biométrique acquise ultérieurement, avec les données biométriques de référence préenregistrées. L'authentification réussie s'il y a concordance.

L'invention prévoit notamment un procédé d'enrôlement biométrique (ou plus généralement de traitement biométrique) qui repose en particulier sur la réalisation d'une vérification, après exécution d'un enrôlement biométrique, de sorte à déterminer si les données biométriques de référence qui ont été enregistrées lors de l'enrôlement biométrique sont valides. Le traitement de ces données biométriques de référence diffère en fonction du résultat de cette vérification de validité. Si les données biométriques de référence obtenues lors de l'enrôlement sont valides, alors ces données biométriques de référence sont conservées en mémoire et tout enrôlement biométrique ultérieur est bloqué pour des raisons de sécurité. Si, en revanche, au moins une partie de ces données biométriques de référence n'est pas valide, cette partie non valide (voire éventuellement toutes les données biométriques de référence, qu'elles soient valides ou non valides) est supprimée et un nouvel enrôlement biométrique est réalisé afin de remplacer au moins la partie non valide des données biométriques de référence par de nouvelles données biométriques de référence.

Comme indiqué en détail ci-après, l'invention vise notamment à permettre un enrôlement biométrique fiable et aisé d'un utilisateur auprès d'un dispositif électronique, tout en maintenant un bon niveau de sécurité, afin notamment d'éviter un utilisateur frauduleuse dudit dispositif.

L'invention concerne également un dispositif électronique correspondant et un programme d'ordinateur correspondant, pour mettre en oeuvre le concept de l'invention.

D'autres aspects et avantages de la présente invention ressortiront des exemples de réalisation décrits ci-dessous en référence aux dessins mentionnés ci-avant.

Dans les modes de réalisation décrits ci-après, l'invention est mise en oeuvre dans le cadre d'un enrôlement digitale en vue de permettre une authentification digital (par empreinte digitale) d'un utilisateur. L'invention peut toutefois s'appliquer plus généralement à un quelconque enrôlement biométrique, y compris pour permettre une authentification à partir d'empreinte biométriques autres que des empreintes digitales (par exemple des empreintes d'iris, empreintes vocales, empreintes d'ADN, etc.).

Par ailleurs, l'invention peut s'appliquer à un quelconque dispositif électronique apte à réaliser une authentification biométrique d'un utilisateur. Dans les modes de réalisation décrits ci-après, l'invention est mise en oeuvre par une carte à puce, par exemple une carte bancaire ou carte de paiement, un badge d'accès, une carte d'identité, une carte de vote, etc. L'invention peut toutefois s'appliquer généralement à des dispositifs électroniques autres que des cartes à puce, tels que par exemple à un terminal tel qu'un smartphone, tablette etc. (par exemple un terminal de paiement). L'invention peut également s'appliquer à un quelconque document électronique identitaire, prenant par exemple la forme d'une carte à puce ou autre, tel que notamment un passeport électronique, une carte d'identité ou un permis de conduire. Selon un exemple particulier, le dispositif électronique est apte à traiter des transactions (par exemple des transactions de paiement) en coopérant avec un terminal externe.

A noter également que la notion de transaction est entendue dans ce document au sens large et comprend par exemple, dans le domaine bancaire, aussi bien une transaction de paiement ou de transfert qu'une consultation d'un compte bancaire sur un terminal bancaire. L'invention est décrite ci-après dans le cadre d'une carte de paiement destinée à réaliser des transactions bancaires. On comprendra que d'autres types de transactions ou opérations sont envisageables dans le cadre de l'invention (vote électronique, transaction pour accéder à des données sensibles, transaction pour obtenir un accès physique ou logique ...).

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

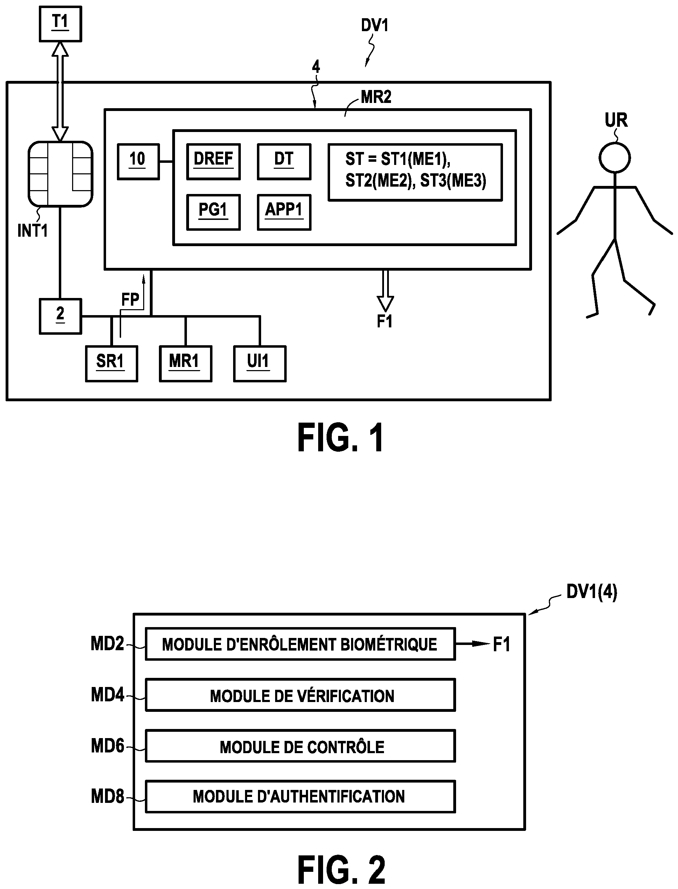

La **figure 1** représente schématique la structure d'un dispositif électronique DV1 configuré pour mette en oeuvre le procédé d'enrôlement biométrique de l'invention selon un mode de réalisation particulier. Dans cet exemple, le dispositif électronique DV1 est une carte à puce apte à réaliser un enrôlement digital d'un utilisateur UR en vue de permettre une authentification digitale ultérieure de cet utilisateur. Comme déjà indiqué, d'autres exemples d'implémentation sont toutefois possibles.

On suppose ici par exemple que la carte à puce DV1 est une carte de paiement (par exemple de type EMV pour « Europay Mastercard Visa », bien que d'autres protocoles soient possibles).

Plus précisément, la carte à puce DV1 comprend dans cet exemple un processeur 2 (dit processeur principal), un module de traitement 4, un capteur d'empreinte biométrique SR1 dit aussi capteur biométrique (un capteur d'empreinte digitale dans cet exemple), une mémoire non volatile MR1 et éventuellement une interface de communication INT1 et/ou une interface utilisateur UI1.

Le processeur principal 2 contrôle le fonctionnement général de la carte à puce DV1. Selon un exemple particulier, le processeur principal 2 contrôle le capteur d'empreinte digitale (dit aussi capteur digital) SR1. Le processeur 2 peut également assurer la communication entre la carte à puce DV1 et l'extérieur via l'interface de communication INT1, bien que d'autres implémentations soient possibles. La carte à puce DV1 peut ainsi coopérer via l'interface de communication INT1 avec, par exemple, un quelconque terminal T1 avec lequel la carte à puce DV1 coopère pour réaliser une fonction donnée, par exemple pour réaliser une transaction. Selon un exemple particulier, le terminal T1 est un terminal de paiement et la carte à puce DV1 est configuré pour coopérer avec le terminal T1 pour réaliser une transaction de paiement (de type EMV par exemple).

Le capteur d'empreinte digital SR1 permet la capture d'empreintes biométriques FP - à savoir des empreintes digitales dans cet exemple - qui sont transmises, par le processeur 2, au module de traitement 4 pour être traitées. Les spécificités du capteur SR1 utilisées peuvent varier selon les choix d'implémentations de l'homme du métier.

L'interface utilisateur UI1 peut éventuellement permettre à l'utilisateur UR d'interagir avec la carte à puce DV1. On suppose toutefois que cette interface utilisateur UI1 est limitée dans le cas présent et ne comprend, par exemple, qu'au moins un voyant lumineux (LED ou autre) configuré pour indiquer à l'utilisateur UR l'état ST dans lequel se trouve couramment la carte à puce DV1 (et plus précisément le module de traitement 4). Selon un exemple particulier, la carte à puce DV1 (et en particulier l'interface utilisateur UI1) est dépourvue de moyen de commande permettant à l'utilisateur d'envoyer des commandes (ou instructions) à la carte à puce DV1. Selon un exemple particulier, la carte à puce DV1 ne comprend pas d'interface utilisateur UI1.

Selon un exemple particulier, le module de traitement 4 est configuré pour mettre en oeuvre le procédé d'enrôlement biométrique de l'invention, ce module de traitement 4 étant distinct du processeur 2, bien que d'autres exemples d'implémentation soient possibles. En particulier, le module de traitement 4 peut être un élément sécurisé apte à coopérer avec le processeur 2 pour réaliser un enrôlement biométrique. Le module de traitement 4 peut ainsi être configuré pour mettre en oeuvre une fonction d'enrôlement biométrique (tout ou partie), notée F1, qui peut être bloquée (ou désactivée) sélectivement par le module de traitement 4 pour empêcher tout enrôlement biométrique ultérieur, comme expliqué ci-après. Des modes de réalisation sans élément sécurisé ou avec des architectures différentes sont toutefois possibles.

Selon une variante, le processeur 2 et le module de traitement 4 coopère ensemble pour mettre en oeuvre collectivement le procédé d'enrôlement biométrique de l'invention. Comme décrit ci-après, la mise en oeuvre des étapes (ou opérations) du procédé de l'invention peut ainsi être répartie entre le processeur 2 et le module de traitement 4.

Comme défini par l'organisme de standardisation « GlobalPlatform » bien connu de l'homme du métier, un élément sécurisé (pour « secure element » en anglais) est une plateforme matérielle et logicielle configurée pour héberger de façon sécurisée des applications et leurs données sensibles associées (clés cryptographiques, algorithmes...), en conformité avec des règles fixées par une autorité tierce de confiance. Un élément sécurisé fournit un environnement d'exécution sécurisé à des applications. Il peut être intégré sous diverses formes, par exemple au sein d'un processeur ou équivalent, ou éventuellement dans un composant tel qu'un module UICC (pour « Universal Integrated Circuit Card »), un élément sécurisé embarqué (ou « embedded SE » ou encore « eSIM ») ou encore une carte microSD. Un module UICC et une carte microSD sont généralement amovibles. Chaque forme d'élément sécurisé est destinée à être utilisée dans des applications bien particulières et doit répondre à des exigences propres au marché concerné.

Plus précisément, le module de traitement 4 comprend un processeur 10 et une mémoire non volatile MR2. Dans l'exemple envisagé ici, la mémoire MR2 est une mémoire non volatile réinscriptible (par exemple de type EEPROM ou flash). Comme indiqué ci-après, cette mémoire permet de stocker diverses éléments (données, programme,...). La manière dont ces éléments sont stockés en mémoire dans le module de traitement 4 peut toutefois être adaptée par l'homme du métier selon le cas d'espèce. En variante, ces divers éléments peuvent être stockés dans plusieurs mémoires (ou zones mémoires) différentes, que ce soient des mémoires volatiles ou non volatiles.

Comme illustré en **figure 1****,** la mémoire non volatile MR2 constitue un support d'enregistrement (ou support d'informations) conforme à un mode de réalisation particulier, lisible par la carte à puce DV1 (et plus particulièrement par le module de traitement 4), et sur lequel est enregistré un programme d'ordinateur PG1 conforme à un mode de réalisation particulier. Ce programme d'ordinateur PG1 comporte des instructions pour l'exécution des étapes d'un procédé d'enrôlement biométrique (ou procédé de traitement biométrique) selon un mode de réalisation particulier, comme décrit ci-après. En variante, ce programme d'ordinateur PG1 peut être enregistré dans une mémoire morte (ROM) du module de traitement 4.

La mémoire non volatile MR2 est également apte à stocker des données biométriques DT qui sont déterminées par le module de traitement 4 à partir d'au moins une empreinte biométrique FP (empreinte digitale) acquise au moyen du capteur biométrique SR1. Comme décrit ultérieurement, des données biométriques DT peuvent être conservées dans la mémoire MR2 en tant que données biométriques de référence DREF afin de permettre une authentification biométrique ultérieure d'un utilisateur UR.

Le module de traitement 4 (ou plus généralement la carte à puce DV1) peut fonctionner selon 3 états distincts notés ST1, ST2 et ST3 (noté plus généralement ST) et peut contrôler l'état ST dans lequel il se trouve de sorte à commuter de l'un à l'autre si besoin, en fonction du traitement en cours dans le cadre du procédé d'enrôlement biométrique. On considère ici que, lorsqu'il se trouve dans les états ST1, ST2 et ST3, la carte à puce DV1 (et plus particulièrement le module de traitement 4) opère respectivement selon le mode de fonctionnement ME1, ME2 et ME3 (noté plus généralement ME) dont la nature sera décrite ci-après.

La mémoire non volatile MR2 peut également comprendre au moins une application APP1 (ou programme d'ordinateur) configurée pour réaliser au moins une fonction prédéterminée qui est activée une fois que l'utilisateur UR a été authentifié par biométrie avec succès par le module de traitement 4. La nature de l'application APP1 et de la ou les fonctions réalisées peut varier selon le cas. Dans le cas où la carte à puce DV1 est une carte de paiement EMV, l'application APP1 peut être une application de paiement configuré pour réaliser des transactions de paiement selon le standard EMV, par exemple en coopération avec le terminal T1 opérant en tant que terminal de paiement.

A noter que certains éléments généralement présents dans une carte à puce ont été volontairement omis car ils ne sont pas nécessaires à la compréhension de la présente invention. A noter également que la carte à puce DV1 représentée en **figure 1** ne constitue qu'un exemple de réalisation, d'autres mises en oeuvre étant possibles dans le cadre de l'invention. Comme le comprend l'homme du métier, certains éléments de la carte à puce DV1 ne sont décrits ici que pour faciliter la compréhension de l'invention, ces éléments n'étant pas obligatoires pour mettre en oeuvre l'invention.

Comme représenté en **figure 2** selon un mode de réalisation particulier, le processeur 10 du module de traitement 4 est piloté par le programme d'ordinateur PG1 pour mettre en oeuvre un certain nombre de modules, à savoir : un module d'enrôlement MD2, un module de vérification MD4, un module de contrôle MD6 et, éventuellement, un module d'authentification MD8. Comme indiqué ci-après, en variante les modules MD2-MD8 peuvent être mis en oeuvre collectivement par le processeur 10 et par le processeur 2 coopérant avec le module de traitement 4, sous le contrôle du programme d'ordinateur PG1.

Le module d'enrôlement MD2 est configuré pour réaliser des enrôlements biométriques dans la carte à puce DV1. Pour ce faire, le module d'enrôlement MD2 met en oeuvre une fonction F1 d'enrôlement biométrique configurée pour réaliser de tels enrôlements. Au cours d'un enrôlement biométrique, le module d'enrôlement MD2 est configuré pour acquérir au moins une première empreinte biométrique FP au moyen du capteur biométrique SR1 et pour obtenir, pour chaque première empreinte biométrique FP acquise, des premières données biométriques DT respectives représentatives d'un utilisateur UR. Le module d'enrôlement MD2 peut ensuite enregistrer, en tant que données biométriques de référence DREF, lesdites premières données biométriques DT dans une mémoire de la carte à puce. Le module d'enrôlement MD2 peut être compris dans le module de traitement 4 (ou alternativement, le module d'enrôlement MD2 est mis en oeuvre collectivement par le processeur 2 et par l'unité de traitement 4) et enregistre les données biométriques de référence DREF dans sa mémoire non volatile MR2.

Le module d'enrôlement MD2 est en outre apte à commuter depuis un état activé, dans lequel il met en oeuvre la fonction F1 d'enrôlement biométrique pour réaliser un enrôlement biométrique, vers un état bloqué dans lequel ladite fonction F1 est bloquée ce qui empêche tout enrôlement biométrique ultérieur.

Le module de vérification MD4 est configuré pour réaliser une vérification d'enrôlement biométrique. Au cours de cette vérification d'enrôlement biométrique, le module de vérification MD4 est configuré pour acquérir au moins une deuxième empreinte biométrique FP au moyen du capteur biométrique SR1 et pour obtenir, pour chaque deuxième empreinte biométrique FP acquise, des deuxièmes données biométriques DT respectives représentatives d'un utilisateur UR. Le module de vérification MD4 vérifie ensuite la validité des données biométriques de référence DREF, enregistrées au préalable par le module d'enrôlement MD2, par comparaison avec lesdites deuxièmes données biométriques DT.

Le module de vérification MD4 peut être compris dans le module de traitement 4 (ou alternativement, le module vérification MD4 est mis en oeuvre collectivement par le processeur 2 et par l'unité de traitement 4) et enregistre les données biométriques de référence DREF dans sa mémoire non volatile MR2.

Le module de contrôle MD6 est configuré, si les données biométriques de référence DREF sont déterminées comme étant valides par le module de vérification MD4, pour bloquer le module d'enrôlement MD2 de sorte à empêcher tout enrôlement biométrique ultérieur et pour conserver les données biométriques de référence DREF dans la mémoire MR2 pour permettre ultérieurement une authentification biométrique.

Le module de contrôle MD6 peut en outre être configuré, si au moins une partie des données biométriques de référence DREF est déterminée comme n'étant pas valide par le module de vérification MD4, pour supprimer au moins ladite partie non valide des données biométriques de référence DREF et pour déclencher un nouvel enrôlement biométrique (par le module d'enrôlement MD2) pour remplacer les données biométriques supprimées par de nouvelles données biométriques DT obtenues à partir d'au moins une nouvelle empreinte biométrique FP.

Le module d'authentification MD8 est configuré pour réaliser, après le blocage du module d'enrôlement MD2, une authentification biométrique comprenant :
- acquisition d'au moins une empreinte biométrique FP ultérieure au moyen du capteur biométrique SR1 ;
- obtention, pour chaque empreinte biométrique FP ultérieure, de données biométriques DT ultérieures respectives qui sont représentatives d'un utilisateur UR ; et
- vérification de ladite au moins une empreinte biométrique FP ultérieure par comparaison des données biométriques DT ultérieures avec les données biométriques de référence DREF.

Dans l'exemple considéré ici, le processeur 10 (ou collectivement le processeur 2 et l'unité de traitement 4) est configuré pour superviser et contrôler l'état ST (et donc le mode de fonctionnement ME) dans lequel se trouve le module de traitement 4 (ou plus généralement la carte à puce DV1). Le processeur 10 fait ainsi office de machine d'état. Comme décrit ci-après, en fonction des traitements réalisés par les modules MD2, MD4 et MD6, le processeur 10 détermine dans quel état ST se trouve couramment la carte à puce DV1 et commute si nécessaire l'état ST de la carte à puce dans un autre état ST approprié de sorte à activer le mode ME correspondant. Ainsi, la carte à puce DV1 (ou le module de traitement 4) peut fonctionner selon l'un parmi les modes de fonctionnement ME suivants : un mode d'enrôlement ME1 (état ST1) permettant au module d'enrôlement MD2 de réaliser un enrôlement biométrique (total ou partiel), un mode de vérification ME2 (état ST2) permettant au module de vérification MD4 de vérifier la validité de données biométriques de référence DREF enregistrées par le module d'enrôlement MD2 et un mode ME3 (état ST3) dit « mode validé » ou « mode bloqué » dans lequel l'enrôlement biométrique est validé et le module d'enrôlement MD2 (et donc sa fonction F1 d'enrôlement) est bloqué, de sorte qu'il n'est plus possible de réaliser un enrôlement biométrique.

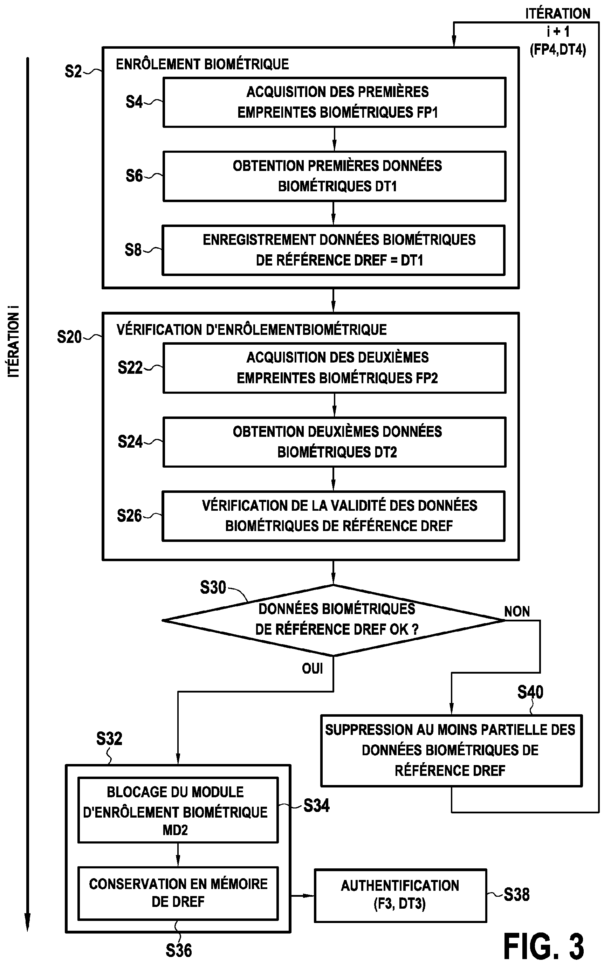

La configuration et le fonctionnement des modules MD2-MD8 apparaîtront plus précisément dans les exemples de réalisation décrits ci-après en référence aux **figures 3****,** **4** et **5****.** Il convient de noter que les modules MD2-MD8 tels que représentés en **figure 2** ne représentent qu'un exemple de mise en oeuvre non limitatif de l'invention.

De manière générale, pour chaque étape (ou opération) du procédé d'enrôlement de l'invention, le dispositif électronique DV1 de l'invention peut comprendre un module correspondant configuré pour réaliser ladite étape.

De façon générale, la mise en oeuvre des modules MD2-MD8 décrits ci-dessus, et des étapes (ou opérations) correspondantes du procédé d'enrôlement biométrique de l'invention, peut être répartie entre le module de traitement 4 et le processeur 2. Ces modules MD2-MD8 peuvent être mis en oeuvre par le processeur 2, ou par le module de traitement 4, ou collectivement par le processeur 2 et par le module de traitement 4. La manière dont le processeur 2 et le processeur 10 se répartissent la mise en oeuvre des modules MD2-MD8 et des opérations correspondantes peut être adaptée par l'homme du métier selon le cas d'usage.

Par exemple, le processeur 2 peut être configuré pour acquérir chaque empreinte biométrique FP au moyen du capteur biométrique SR1. De plus, c'est le processeur 2 ou le module de traitement 4 (i.e. le processeur 10) qui peut être chargé de convertir chaque empreinte biométrique FP ainsi acquise en des données biométrique DT respectives représentatives d'un utilisateur UR. Ainsi, selon un exemple particulier, le module d'enrôlement MD2 (et l'opération correspondante) est mis en oeuvre collectivement par le processeur 2, qui est configuré pour acquérir ladite au moins une première empreinte biométrique FP au moyen du capteur biométrique SR1, et par le module de traitement 4 qui est configuré pour obtenir, pour chaque première empreinte biométrique FP acquise, des premières données biométriques DT respectives représentatives d'un utilisateur UR (comme décrit plus en détail ci-après). De même, selon un exemple particulier, le module de vérification MD4 (et l'opération correspondante) peut être mis en oeuvre par le processeur 2 et/ou par le module de traitement 4.

Selon un exemple particulier, le module de traitement 4 est configuré pour réaliser l'enregistrement (noté ci-après S8 en référence à la **figure 3**), en tant que données biométriques de référence, dans la mémoire, des premières données biométriques obtenues, et pour réaliser la vérification (notée ci-après S26 en référence à la **figure 3**) de la validité des données biométriques de référence. Le processeur 2, externe au module de traitement 4, peut quant à lui être configuré pour réaliser l'acquisition de chaque empreinte biométrique FP et pour obtenir (par traitement) des données biométriques DT à partir de chaque empreinte biométrique ainsi acquise. Dans cet exemple particulier, le module de contrôle MD6 peut également être mis en oeuvre par le module de traitement 4, d'autres implémentations étant toutefois possibles.

Un mode de réalisation particulier est à présent décrit en référence à la **figure 3****.** Plus précisément, la carte à puce DV1 (et plus précisément le module de traitement 4) met en oeuvre un procédé d'enrôlement biométrique (ou plus généralement un procédé de traitement biométrique) en exécutant le programme d'ordinateur PG1.

On considère ici que les empreintes biométriques traitées par le module de traitement 4 sont des empreintes digitales, bien que d'autres types d'empreintes biométriques sont possibles dans le cadre de l'invention.

A noter que lors de l'exécution du procédé d'enrôlement biométrique, la carte à puce DV1 peut être alimentée électriquement de diverses manières comme décrit ultérieurement, le choix d'implémentation étant laissé à l'homme du métier.

On suppose qu'un utilisateur UR souhaite configurer sa carte à puce DV1 afin de pouvoir ultérieurement s'authentifier par empreinte digitale auprès de la carte à puce DV1 et ainsi utiliser cette carte, par exemple pour causer la mise en oeuvre d'une fonction de l'application APP1 (par exemple une fonction de paiement) ou pour tout autre usage. On suppose qu'aucun enrôlement biométrique (ou enrôlement digital) n'a à ce stade été réalisé par la carte à puce DV1, cette dernière se trouvant par défaut dans un état initial, à savoir l'état d'enrôlement ST1.

Conformément au mode d'enrôlement ME1, le module de traitement 4 est donc en attente de réaliser un enrôlement biométrique. Tant qu'un tel enrôlement n'a pas été réalisé avec succès, la carte à puce DV1 ne peut pas être utilisée par l'utilisateur UR (et notamment l'application APP1 qui est bloquée par le module de traitement 4). De manière alternative, seule la (ou les) fonction nécessitant une authentification biométrique et mise en oeuvre par l'application APP1 est bloquée (par exemple, au moins une autre fonction mise en oeuvre par la carte à puce DV1 reste active lorsque la fonction de l'application APP1 qui nécessite une authentification biométrique est bloquée). Par exemple, la validation par biométrie d'une transaction de paiement est bloqué, de sorte que seule la validation par code PIN de la transaction soit toujours active et donc disponible.

Comme indiqué ci-après, cet enrôlement biométrique peut être réalisé de manière itérative. Une première itération (ou cycle) - notée i - de ce processus itératif est décrit ci-après.

On considère ainsi que le module de traitement 4 réalise une étape S2 (**figure 3**) d'enrôlement biométrique au cours de laquelle le module d'enrôlement MD2 réalise une étape d'acquisition S4, une étape S6 d'obtention et une étape S8 d'enregistrement comme décrit ci-après. Comme déjà indiqué, cette étape S2 peut être réalisée par le module de traitement 4 ou, en variante, par le processeur 2, ou selon une autre variante, collectivement par le module de traitement 4 et le processeur 2.

Plus précisément, au cours de l'étape S4 d'acquisition, le module d'enrôlement MD2 fait l'acquisition d'au moins une première empreinte digitale FP1 au moyen du capteur biométrique SR1. Pour ce faire, l'utilisateur UR appose l'un ou une pluralité de ses doigts sur le capteur biométrique SR1. On suppose dans l'exemple considéré ici qu'une pluralité de premières empreintes digitales FP1 sont acquises en présentant plusieurs doigts (un même doigt pouvant être présenté plusieurs fois) sur le capteur biométrique SR1.

Au cours de l'étape S6 d'obtention, le module d'enrôlement MD2 récupère les premières empreintes digitales FP1 et obtient, pour chaque première empreinte digitale FP1 acquise en S4, des premières données biométriques DT1 respectives représentatives d'un utilisateur UR. Ces premières données biométriques DT1 constituent un modèle des premières empreintes digitales correspondantes.

Plus précisément, dans l'exemple particulier considéré ici, c'est le processeur 2 - agissant en tant que module d'enrôlement biométrique MD2 - qui analyse lui-même (par tout traitement approprié) les premières empreintes digitales FP1 reçues et détermine (S6), à partir de chaque première empreinte digitale FP1 acquise au moyen du capteur biométrique SR1, des premières données biométriques DT1 respectives qui sont représentatives d'un utilisateur UR. Le processeur 2 peut ainsi être configuré pour convertir chaque empreinte digitale FP acquise au cours du procédé par le capteur biométrique SR1 en données biométriques correspondantes. Le processeur 2 transmet ensuite ces premières données biométrique DT1 au module de traitement 4 (au processeur 10) qui réalise l'étape S8 d'enregistrement (**figure 3**). Autrement dit, dans cet exemple particulier, le module d'enrôlement biométrique MD2 (**figure 2**) est mis en oeuvre collectivement par le processeur 2 et par le processeur 10 du module de traitement 4. D'autres exemples d'implémentations sont toutefois possibles.

Ainsi, selon une variante, le processeur 2 de la carte à puce DV1 transmet au module de traitement 4 chaque empreinte digitale FP acquise au cours du procédé par le capteur biométrique SR1. Selon encore une autre variante, le capteur biométrique SR1 est intégré dans ou connecté directement au module de traitement 4 de sorte que le processeur 10 n'a pas besoin de transmettre les empreintes digitales, celles-ci étant acquises directement par le module de traitement 4 qui met en oeuvre seul le module d'enrôlement biométrique MD2.

Dans le cas d'espèce, on suppose que le module d'enrôlement MD2 détermine des premières données biométriques DT1 respectives correspondant à chacune des premières empreintes digitales FP1 acquises en S4.

De façon connue, chaque empreinte digitale FP acquise au moyen du capteur biométrique SR1 constitue une représentation des crêtes dermo-épidermiques (ou crêtes papillaires) d'un doigt d'un utilisateur UR. La géométrique de ces crêtes forme un motif qui est propre à chaque personne et permet de l'authentifier avec une grande fiabilité. Ce motif est caractérisé par des points caractéristiques (dits aussi points singuliers).

Au cours de l'analyse réalisée en S6, des premières données biométriques DT1 (des données d'empreinte digitale dans cet exemple) représentatives de points caractéristiques des premières empreintes digitales FP1 peuvent être extraites par le module d'enrôlement MD2. Comme déjà indiqué, cette opération peut être mise en oeuvre par le processeur 2 ou, en variante, par le module de traitement 4 (par le processeur 10). Pour réaliser cette extraction des premières données biométriques, le module d'enrôlement MD2 peut analyser une image respective définie par chaque première empreinte digitale FP1 et identifier des points caractéristiques à partir d'une lecture des pixels de chaque image. Dans l'exemple considéré ici, ces points caractéristiques comprennent en particulier des minuties (points singuliers locaux), à savoir des points d'irrégularité se trouvant sur les lignes papillaires (terminaisons, bifurcations, îlots, etc.). D'autres points caractéristiques peuvent toutefois être pris en compte (points singuliers globaux), les choix d'implémentation étant laissés à l'homme du métier pour la mise en oeuvre de l'analyse biométrique en S6 (**figure 3**).

Au cours de l'étape S8 d'enregistrement, le module d'enrôlement MD2 enregistre, en tant que données biométriques de référence DREF, les premières données biométriques FP1 en mémoire dans la carte à puce DV1. Dans l'exemple considéré ici, les données biométriques de référence FP1 sont enregistrées dans la mémoire MR2 du module de traitement 4. Le module de traitement 4 étant un élément sécurisé dans cet exemple, les données biométriques de référence DREF sont protégées contre tout accès ou manipulations par un tiers malveillant.

Une fois l'étape S2 d'enrôlement biométrique achevée, le processeur 10 commute le module de traitement 4 dans le deuxième état ST2, dit état de vérification. Conformément au mode de vérification ME2, le module de traitement MD2 réalise alors une étape S20 de vérification (**figure 3**), dite vérification d'enrôlement biométrique, au cours de laquelle le module de vérification MD4 réalise une étape S22 d'acquisition, une étape S24 d'obtention et une étape S26 de vérification comme décrit ci-après.

Plus précisément, au cours de l'étape S22 d'acquisition, le module de vérification MD4 fait l'acquisition d'au moins une deuxième empreinte digitale FP2 au moyen du capteur biométrique SR1. Pour ce faire, l'utilisateur UR appose à nouveau l'un ou une pluralité de ses doigts sur le capteur biométrique SR1. On suppose dans l'exemple considéré ici qu'une pluralité de deuxièmes empreintes digitales FP2 sont acquises en présentant plusieurs doigts (un même doigt pouvant être présenté plusieurs fois) sur le capteur biométrique SR1. Dans l'exemple considéré, le module de vérification MD4 fait l'acquisition (S22) d'une deuxième empreinte digitale FP2 respective pour chaque première empreinte digitale FP1 acquise en S4 par le module d'enrôlement MD2. Selon une variante, le module de vérification MD4 fait l'acquisition de M deuxièmes empreintes digitales FP2, chaque deuxième empreinte digitale FP2 étant respective (correspondant) à une pluralité de première empreinte digitale FP1 parmi les premières empreintes digitales (M étant un entier au moins égal à 2).

Au cours de l'étape S24 d'obtention, le module de vérification MD4 récupère les deuxièmes empreintes digitales FP2 et obtient, pour chaque deuxième empreinte digitale FP2 acquise en S22, des deuxièmes données biométriques DT2 respectives représentatives d'un utilisateur UR. Ces deuxièmes données biométriques DT2 constituent un modèle des deuxièmes empreintes digitales correspondantes.

Pour ce faire, le module de vérification MD4 analyse les deuxièmes empreintes digitales FP2 de sorte à obtenir par traitement les deuxièmes données biométriques FP2 correspondant à chaque deuxième empreinte digitale FP2. A noter que le module de vérification MD4 peut analyser en S24 les deuxièmes empreintes digitales FP2 de façon analogue à l'analyse réalisée en S6 par le module d'enrôlement MD2 sur les premières empreintes digitales FP1, ou éventuellement de façon différente.

Dans l'exemple particulier considéré, c'est le processeur 2 - agissant en tant que module de vérification MD4 - qui analyse lui-même (par tout traitement approprié) les deuxièmes empreintes digitales FP2 acquises au moyen du capteur biométrique SR1 et détermine (S24), à partir de chaque deuxième empreinte digitale FP2 acquise, des deuxièmes données biométriques DT2 respectives qui sont représentatives d'un utilisateur UR. Le processeur 2 transmet ensuite ces deuxièmes données biométriques DT2 au module de traitement 4 (au processeur 10) qui réalise l'étape S26 d'enregistrement (**figure 3**). Autrement dit, dans cet exemple particulier, le module de vérification MD4 (**figure 2**) est mis en oeuvre collectivement par le processeur 2 et par le processeur 10 du module de traitement 4. D'autres exemples d'implémentations sont toutefois possibles.

Toujours dans l'exemple considéré, au cours de l'étape S26 de vérification, le module de vérification MD4 vérifie la validité des données biométriques de référence DREF, précédemment enregistrée (S8) par le module d'enrôlement MD2. Pour ce faire, le module de vérification MD4 compare les données biométriques de référence DREF stockées dans la mémoire MR2 avec les deuxièmes données biométriques obtenues en S24 (**figure 3**). On suppose dans cet exemple que cette opération est réalisée par le processeur 10 agissant en tant que module de vérification MD4.

Plus précisément, lors de l'étape S26 de vérification, les données biométriques de référence DREF correspondant à chaque première empreinte biométrique FP1 enregistrées en S8 sont comparées avec les deuxièmes données biométriques FP2 correspondant à chaque deuxième empreinte biométrique respective. Chaque partie des données biométriques de référence DREF coïncidant avec une partie au moins des deuxièmes données biométriques DT2 est déterminée en S26 comme étant valide. En revanche, chaque partie des données biométriques de référence DREF qui ne coïncide pas avec une partie correspondante des deuxièmes données biométriques DT2 est déterminée en S26 comme étant invalide. Autrement dit, les données biométrique de référence DREF de chaque première empreinte FP1 sont vérifiées : si elles coïncident avec des deuxièmes données biométriques DT2 d'une deuxième empreinte digitale FP1 elles sont considérées valides, sinon elles sont considérées valides.

Selon le mode de réalisation considéré, une « partie » de données biométriques au sens de l'invention peut correspondre, par exemple, à l'une quelconque des possibilités suivantes, voire à une combinaison des possibilités suivantes :
- chaque partie des données biométrique correspond à un doigt particulier (index droit, majeur droit, ...) ;
- une partie des données peut correspondre à un sous-ensemble des points caractéristiques (minutea) d'un doigt particulier
- chaque partie des données correspond à une empreinte biométrique acquise respective (sachant qu'il peut y avoir plusieurs empreintes biométriques acquises pour un même doigt particulier).

Ce que l'on entend par « partie » de données biométriques peut être adapté par l'homme du métier selon chaque cas d'usage.

Les données biométriques de référence DREF peuvent s'avérer invalides pour diverses raisons dont notamment une mauvaise capture des empreintes digitales FP1 sur le capteur biométrique SR1 lors de l'étape S4 d'acquisition. Comme déjà indiqué, le processus d'enrôlement biométrique (en particulier la capture des empreintes digitales) peut être source de confusion et être mal maîtrisé par le titulaire de la carte à puce DV1, d'autant plus dans le cas où l'utilisateur ne dispose pas d'une interface utilisateur élaborée. Le titulaire peut mal positionner ses doigts causant ainsi un enrôlement de mauvaise qualité. Les conditions environnementales (humidité) et l'état de la surface des doigts sont aussi des facteurs pouvant affecter la qualité de l'enrôlement.

Selon un exemple particulier, les données biométriques de référence DREF peuvent être analysées en S26 (**figure 3**) par le module de vérification MD4 pour déterminer si elles satisfont au moins un critère prédéfini de sorte que tout ou partie des données biométriques DREF est considéré valide seulement si ledit au moins un critère prédéfini est rempli. Selon un exemple particulier, les données biométriques de référence DREF sont vérifiées en S26 globalement de sorte que si au moins une partie des données biométriques de référence DREF ne coïncide pas avec une partie correspondante des deuxièmes données biométriques DT2, l'ensemble des données biométriques de référence DREF est considérée invalide. En variante, la vérification S26 peut être segmentée de sorte qu'une partie des données biométriques de référence DREF peut être jugée valide tandis qu'une autre partie est jugée invalide. A noter que le module de vérification MD4 peut utiliser un algorithme de comparaison différent de celui utilisé pour l'authentification biométrique ultérieure de l'utilisateur (une fois le procédé d'enrôlement achevé).

Une fois l'étape S20 de vérification d'enrôlement biométrique achevée, le module de contrôle MD6 détermine (S30) comment poursuivre le procédé d'enrôlement biométrique, en fonction du résultat de l'étape S26 de vérification. Si les données biométriques de référence DREF sont déterminées comme étant valides en S26, le procédé se poursuit avec l'étape S32 (**figure 3**). En revanche, si au moins une partie des données biométriques de référence DREF est déterminée comme n'étant pas valide en S26, le procédé se poursuit avec l'étape S40.

Au cours de l'étape S32 (cas où les données biométriques DREF sont valides), le module de contrôle MD6 bloque (S34) le module d'enrôlement MD2 de sorte à empêcher tout enrôlement biométrique ultérieur. Ceci a pour conséquence d'inhiber la fonction F1 d'enrôlement biométrique du module d'enrôlement MD2. En outre, le module de contrôle MD6 cause (S34) le maintien en mémoire des données biométriques de référence DREF de sorte à permettre ultérieurement une authentification biométrique à partir des données biométriques de référence DREF. Dans cet exemple, les données biométriques de référence DREF sont ainsi conservées dans la mémoire MR2 de sorte à ce qu'elles puissent être comparées à des données biométriques obtenues ultérieurement lors d'une authentification biométrique, afin d'authentifier un utilisateur.

Une fois le module d'enrôlement MD2 bloqué, le processeur 10 commute le module de traitement 4 dans l'état ST3 validé. Conformément au mode validé ME3, la fonction F1 d'enrôlement biométrique est bloquée et le module de traitement 4 se met en attente pour réaliser une authentification biométrique en utilisant les données DREF comme données biométriques de référence.

Ainsi, comme illustré en **figure 3****,** le module de traitement 4 peut réaliser une authentification biométrique (S38) après le blocage du module d'enrôlement MD2 (une fois le mode ME3 activé). Au cours de l'authentification biométrique S38, le module d'authentification MD8 fait l'acquisition d'au moins une empreinte digitale FP3 ultérieure au moyen du capteur biométrique SR1. On considère par exemple qu'une pluralité d'empreinte digitales FP3 sont acquises (correspondant par exemple à plusieurs doigts), bien que d'autres exemples sont possibles où seule une empreinte digitale FP3 est acquise. Le module d'authentification MD8 obtient ensuite, pour chaque empreinte digitale FP3 ultérieure, des données biométriques DT3 ultérieures respectives qui sont représentatives d'un utilisateur. Pour ce faire, le module d'authentification MD8 réalise par exemple une analyse analogue à celle réalisée par le module d'enrôlement en S6 (**figure 3**). Le module d'authentification MD8 vérifie alors les empreintes digitales FP3 ultérieures par comparaison des données biométriques ultérieures avec les données biométriques de référence DREF. Pour ce faire, les données biométriques DT3 correspondant à chaque empreinte digitale FP3 sont comparées avec les données biométriques de référence DREF. L'authentification S38 est passée avec succès si les données biométriques DT3 coïncident (ou concordent) avec tout ou partie des données biométrique de référence DREF.

En revanche, comme déjà indiqué ci-avant, si au moins une partie des données biométriques de référence DREF est déterminée comme n'étant pas valide en S26 (**figure 3**), le procédé se poursuit avec l'étape S40. Au cours de cette étape S40, le module de contrôle MD6 supprime au moins la partie non valide des données biométriques de référence DREF et déclenche un nouvel enrôlement biométrique S2 (analogue à l'enrôlement biométrique initial S2 décrit ci-avant) pour remplacer les données biométriques DREF supprimées par de nouvelles données biométriques DT4 obtenues à partir d'au moins une nouvelle empreinte biométrique FP4.

Les étapes S2 à S40 du procédé peuvent ainsi être réalisées de façon itérative au cours d'un processus itératif. Ainsi, en réponse au déclenchement causé en S40 par le module de vérification MD6, le processeur 10 commute le module de traitement 4 dans l'état ST1 d'enrôlement afin d'initier un nouvel enrôlement biométrique S2 au cours d'une nouvelle itération i+1 du processus itératif. Conformément au mode d'enrôlement ME1, le module de traitement 4 réalise un nouvel enrôlement biométrique S4 afin de compléter ou réinitialiser les données biométriques de référence DREF. Cette nouvelle itération i+1 (et toutes éventuelles itérations intérieures) est réalisée de façon analogue à la première itération i, à la nuance près que les itérations i+1 et suivantes peuvent causer l'obtention et la vérification de toutes les données biométriques de référence DREF ou d'une partie seulement (dans le cas particulier où une partie jugée valide des données biométriques de référence DREF a été conservée en mémoire lors de l'étape S40 de la précédente itération). Divers implémentations sont toutefois possibles.

Selon un premier exemple, si au moins une partie des données biométriques de référence DREF est déterminée comme n'étant pas valide lors de l'étape S20 vérification d'enrôlement biométrique, toutes les données biométriques de référence DREF préalablement enregistrées en S2 sont supprimées en S40 (les parties non valides ainsi que toutes éventuelles parties jugées valides) et un nouvel enrôlement biométrique S2 est déclenché (S40) au cours d'une nouvelle itération i+1 du processus itératif pour remplacer les données biométriques supprimées (c'est-à-dire toutes les données biométriques de référence DREF) par de nouvelles données biométriques DREF obtenues à partir d'au moins une nouvelle empreinte biométrique FP4 (**figure 3**).

Par exemple, si le module de vérification MD4 détecte que l'enrôlement biométrique d'au moins X empreintes digitales FP1 sur un total de Y empreintes digitales FP1 acquises en S4 a échoué, toutes les Y empreintes digitales sont de nouveau acquises au cours d'un nouvel enrôlement biométrique (avec X et Y étant des entiers tels que Y ≥ X ≥ 1).

Selon un deuxième exemple, si seulement une partie (non nulle) des données biométriques de référence DREF est déterminée comme n'étant pas valide lors de l'étape S20 de vérification d'enrôlement biométrique, la partie non valide (non nulle) des données biométriques de référence DREF est supprimée (S40) de sorte à être remplacée lors d'un nouvel enrôlement biométrique S2 au cours d'une nouvelle itération i+1 du processus itératif, tandis que la partie valide des données biométriques de référence DREF est conservée dans la mémoire MR2 pour permettre ultérieurement une authentification biométrique (S38).

Autrement dit, il est possible de réaliser une nouvelle itération i+1 du processus d'enrôlement afin de réaliser un nouvel enrôlement partiel pour remplacer une partie seulement (la partie invalide) des données biométriques de référence DREF précédemment obtenues à l'itération i. Ainsi, les premières empreintes digitales FP1 correspondant à la partie non valide des données biométriques de référence DREF sont enrôlées de nouveau lors d'un nouvel enrôlement biométrique S2. Le module de contrôle MD6 conserve en revanche en mémoire la partie valide des données biométriques de référence DREF issues des premières empreintes digitales FP1.

Le module de traitement 4 peut ainsi poursuivre le processus itératif S2-S40 tel que décrit précédemment tant que les données biométriques de référence DREF enregistrées dans la mémoire MR2 n'ont pas été validées (S20). Une fois les données biométriques de référence DREF validées en S20, le module de traitement 4 réalise l'étape S32 (**figure 3**) et se met en attente (état ST3 validé) pour réaliser une authentification biométrique S38.

Comme déjà indiqué, pour permettre une authentification biométrique fiable du porteur, il est nécessaire que les données biométriques de référence (le modèle d'empreinte) DREF préenregistré dans la carte à puce DV1 soient le plus fidèles possible vis-à-vis du ou des doigts dudit porteur. L'invention permet ainsi d'assurer un enrôlement biométrique fiable et aisé d'un utilisateur auprès d'un dispositif électronique (tel qu'une carte à puce par exemple), tout en maintenant un bon niveau de sécurité, afin de garantir des bons résultats lors de l'authentification biométrique et afin d'améliorer l'expérience de l'utilisateur.

Grâce à l'invention, un enrôlement biométrique fiable est possible même si le porteur échoue au moins partiellement l'enrôlement biométrique lors d'un ou de plusieurs premiers essais. La carte à puce DV1 est capable de vérifier si l'enrôlement biométrique réalisé est satisfaisant et adapte son état en conséquence pour permettre à l'utilisateur de répéter, au moins en partie, l'enrôlement. Ainsi, les erreurs ou problèmes éventuels rencontrés par le porteur lors de l'enrôlement biométrique n'impacte pas négativement son expérience d'utilisateur. En particulier, il n'est plus obligé de rapporter sa carte à puce à l'émetteur dans le cas où il a échoué l'enrôlement biométrique lors de son premier essai.

Cette flexibilité accrue lors du processus d'enrôlement biométrique ne se fait toutefois pas au détriment de la sécurité de la carte à puce DV1 puisque, dès lors que l'enrôlement biométrique est jugé satisfaisant par la carte, celle-ci bloque la fonction d'enrôlement biométrique afin d'empêcher tout nouvel enrôlement ultérieur. Il n'est ainsi pas possible pour un tiers malveillant par exemple de s'enrôler auprès de la carte à puce DV1 une fois que le porteur a achevé le processus d'enrôlement.

Afin de pallier à ces difficultés, il a été envisagé de laisser la possibilité aux utilisateurs de répéter l'étape d'enrôlement plusieurs fois, si par exemple l'enrôlement n'a pas été réalisé correctement ou si les résultats lors de l'authentification ne sont pas satisfaisants. Cependant, la capacité des cartes à puce à réaliser plusieurs enrôlements dans le temps engendre une faille sécuritaire dans la mesure où un tiers malveillant pourrait être en mesure de modifier frauduleusement l'enrôlement réalisé au préalable par le titulaire de la carte.

Par ailleurs, divers mécanismes de sécurité peut être mis en oeuvre en complément par la carte à puce DV1 pour sécuriser le processus d'enrôlement biométrique. Ainsi, selon un mode de réalisation particulier, si une commande prédéfinie est reçue par le module de traitement 4 de la carte à puce DV1 après exécution de l'enrôlement biométrique S2, mais avant achèvement de l'étape S20 (**figure 3**) de vérification d'enrôlement biométrique (ou avant achèvement de l'étape S32 ou S34, ou plus généralement avant achèvement d'au moins l'une parmi S20 et S34 (ou S32)), le module de traitement 4 supprime toutes les données biométriques de référence DREF enregistrées dans la mémoire MR2 et déclenche un nouvel enrôlement biométrique S2 au cours d'une nouvelle itération i+1 du processus itératif pour remplacer les données biométriques de référence DREF supprimées par de nouvelles données biométriques DREF obtenues à partir d'au moins une nouvelle empreinte biométrique FP4. Autrement dit, en cas d'interruption de l'enrôlement biométrique suite à la réception d'au moins une commande prédéfinie, les données biométriques de référence DREF sont supprimées et le processus itératif reprend à zéro.

Selon un exemple particulier, si une commande prédéfinie est reçue par la carte à puce DV1 (par exemple par le module de traitement 4) après exécution de l'enrôlement biométriques mais avant achèvement d'au moins l'un parmi :
- la vérification S20 d'enrôlement biométrique ; et
- le blocage S34 du module d'enrôlement MD2 ;
alors la carte à puce DV1 (par exemple le module de traitement 4) supprime toutes les données biométriques de référence DREF enregistrées dans la mémoire MR2 et déclenche un nouvel enrôlement biométrique au cours d'une nouvelle itération du processus itératif pour remplacer les données biométriques de référence DREF supprimées par de nouvelles données biométriques obtenues à partir d'au moins une nouvelle empreinte biométrique.

Cette suppression des données biométriques de référence DREF est par exemple déclenchée si une telle commande prédéfinie est reçue par le module de traitement 4 depuis le processeur 2 de la carte entre l'enrôlement biométrique S2 et la vérification d'enrôlement biométrique S20. Dans ce cas, le module de traitement 4 refuse ainsi de valider l'enrôlement biométrique réalisé en S2 et force le retour à l'état initial ST1 d'enrôlement de sorte à réaliser un nouvel enrôlement biométrique S2.

Ce mécanisme de sécurité peut être déclenché, sur détection qu'une quelconque commande (APDU ou autre), par exemple pour traiter une transaction (avec un terminal externe T1), est reçue par le module de traitement 4 après exécution de l'enrôlement biométrique S2, mais avant achèvement de l'étape S20 de vérification d'enrôlement biométrique. Le mécanisme de sécurité peut par exemple être déclenché sur détection de n'importe quelle commande APDU ou seulement pour sur détection d'une commande APDU d'un type prédéfini. Il peut s'agir par exemple d'une commande APDU pour traiter une transaction de paiement EMV (commande ATR...).

Selon une variante, si une commande prédéfinie est reçue par le module de traitement 4 de la carte à puce DV1 après exécution de l'enrôlement biométrique S2, mais avant achèvement de l'étape S20 de vérification d'enrôlement biométrique (**figure 3**), le module de traitement 4 supprime toutes les données biométriques de référence DREF enregistrées dans la mémoire MR2 et force la mise à l'état ST3 (correspondant au mode ME3 dit « validé » ou « bloqué »). La fonction d'enrôlement F1 est alors bloquée et l'authentification biométrique n'est plus possible puisqu'aucune empreinte de référence n'est enregistrée dans la mémoire MR2.

Il est ainsi possible de sécuriser le processus d'enrôlement biométrique en évitant que des commandes non désirables (éventuellement malveillantes) viennent perturber ou fausser l'enrôlement biométrique. Cela permet également d'éviter de créer la confusion chez l'utilisateur qui pourrait ne pas savoir comment poursuivre l'enrôlement biométrique lorsqu'un évènement vient interrompre le processus d'enrôlement.

Par ailleurs, comme déjà indiqué, le dispositif électronique de l'invention ne dispose pas nécessairement d'une interface utilisateur, et peut éventuellement comprendre une interface utilisateur UI1 rudimentaire (**figure 1**). De même, le dispositif électronique de l'invention ne dispose pas nécessairement d'une source d'alimentation interne pour alimenter électriquement le dispositif lors de l'exécution du procédé de l'invention. Pour pallier à ces contraintes, le dispositif électronique de l'invention peut coopérer avec un dispositif périphérique externe lors de l'exécution du procédé de l'invention.

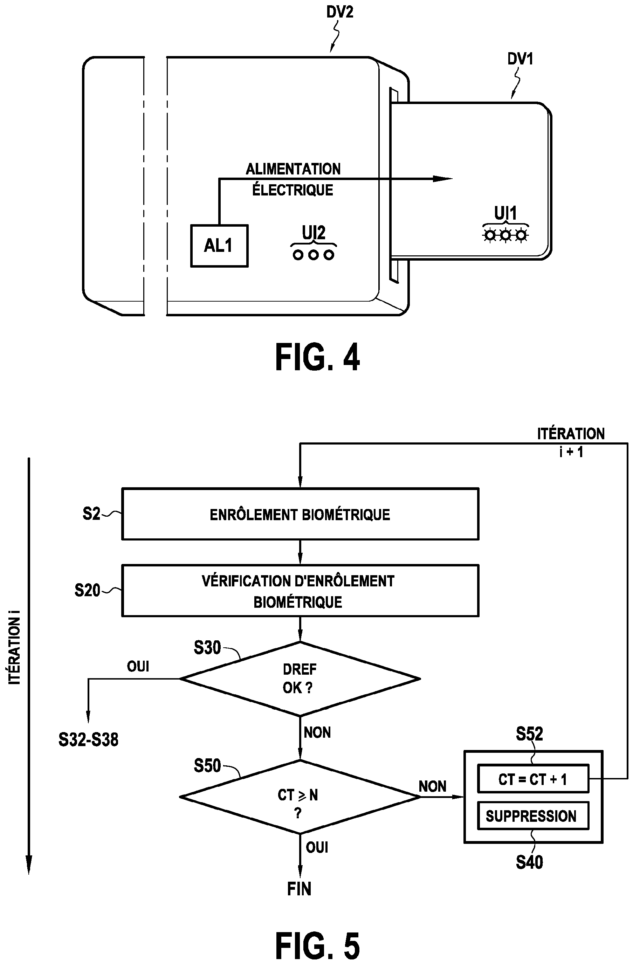

Comme représenté en **figure 4****,** la carte à puce DV1 peut être configuré pour coopérer avec un dispositif périphérique DV2 qui prend ici la forme d'un étui (ou équivalent) bien que d'autres implémentations soient possibles. Le dispositif périphérique DV2 comprend une source d'alimentation interne AL1 adaptée pour alimenter électriquement la carte à puce DV1 lorsque le dispositif périphérique DV2 et la carte à puce DV1 sont couplés ensemble au cours de l'enrôlement biométrique. Le couplage peut être réalisé par exemple par contact (dans cet exemple particulier, la carte à puce DV1 est insérée dans l'étui DV2), au moyen de l'interface de communication INT1 de la carte à puce DV1 et d'une interface de communication correspondante dont est équipé le dispositif périphérique DV2. Selon une variante, le couplage peut être réalisé sans contact, par exemple lorsque la carte à puce DV1 est une carte comprend une interface de communication sans contact.

Le dispositif périphérique DV2 peut éventuellement aussi comprendre une interface utilisateur UI2 pour guider l'utilisateur lors de son enrôlement biométrique auprès de la carte à puce DV1. Pour ce faire, la carte à puce DV1 est configurée pour envoyer au dispositif périphérique DV2, au cours du procédé d'enrôlement biométrique, des signaux représentatifs de l'état ST courant dans lequel se trouve la carte à puce DV1. Dans ce cas, il n'est pas nécessaire que la carte à puce DV1 dispose elle-même d'une interface utilisateur UI1, bien que cela soit aussi possible. L'interface utilisateur UI2 peut comprendre par exemple un ou de multiples voyants lumineux (des LEDs par exemple) pour indiquer visuellement l'état ST dans lequel se trouve couramment la carte à puce DV1. Ainsi, l'état des voyants peut être adapté par le dispositif périphérique en fonction de l'état ST courant de la carte à puce DV1.

Dans le cas où le dispositif périphérique DV2 comprend une interface utilisateur DV2, celle-ci peut être très limitée. En particulier, le dispositif périphérique DV2 peut être dépourvu d'écran.

Selon un exemple particulier, dispositif périphérique DV2 ne comprend aucun processeur (ou équivalent). Il s'agit donc d'un dispositif comprenant des ressources très limitées.

Le dispositif périphérique DV2 peut aussi être dépourvu de moyen de commande permettant à un utilisateur UR de contrôler l'enrôlement biométrique par l'envoi d'une quelconque commande à la carte à puce DV1. Le dispositif périphérique DV2 est par exemple dans l'incapacité d'authentifier un utilisateur qui s'enrôle auprès de la carte à puce DV1, cette faille sécuritaire étant toutefois palliée par le procédé d'enrôlement biométrique mis en oeuvre par la carte à puce DV1, comme déjà décrit ci-avant.

Selon un exemple particulier, le dispositif périphérique DV2 est dépourvu de toute interface d'entrée (de type bouton, actuateur ou autre). Comme décrit plus en détail ci-après, l'alimentation interne fournie par le dispositif périphérique DV2 peut en revanche être détectée par la carte à puce DV1. Chaque couplage peut alors être utilisé comme une commande envoyée à la carte à puce DV1 pour contrôler l'exécution du procédé d'enrôlement biométrique. Autrement dit, le processus de couplage/découplage peut être avantageusement utilisé comme moyen pour l'utilisateur de communiquer avec sa carte à puce DV1.

La carte à puce DV1 (et plus particulièrement le processeur principal 2) peut être configurée pour détecter lorsqu'elle est couplée au dispositif périphérique via son interface de communication INT1. Cette détection peut être réalisée par exemple par une configuration spécifique de ses entrées/sorties de la carte à puce DV1, qui comprend un système de résistances « pull up » et « pull down » dont le principe est bien connu de l'homme du métier. Sur détection d'un couplage entre le dispositif périphérique DV2 et la carte à puce DV1, le processeur principal 2 de la carte génère des commandes internes qui sont envoyées au module de traitement 4.

Ainsi, le module de traitement 4 peut être configuré pour initier l'étape S2 d'enrôlement biométrique, l'étape S20 de vérification d'enrôlement biométrique, et éventuellement aussi l'étape S40 d'authentification, sur détection qu'un nouveau couplage est initié entre la carte à puce DV1 et le dispositif périphérique DV2 (par exemple sur détection d'une nouvelle mise sous tension de la carte à puce DV1 du fait de l'alimentation électrique fournie par le dispositif périphérique DV2). Par exemple, sur chaque détection d'une nouvelle mise sous tension de la carte à puce DV1, le module de traitement 4 détecte un nouveau couplage avec le dispositif périphérique DV2. De façon avantageuse, l'utilisateur peut effectuer des couplages et découplages successifs entre le dispositif périphérique DV2 et la carte à puce DV1 (par exemple en insérant la carte à puce DV1 dans le dispositif périphérique DV2 en forme d'étui puis en retirant la carte de l'étui, et ainsi de suite), chaque nouveau couplage étant interprété par la carte à puce DV1 comme une instruction causant le déclenchement d'un enrôlement biométrique S2 ou d'une vérification S20 selon le cas (voire éventuellement le déclenchement d'une étape S38 d'authentification biométrique ultérieure). L'utilisateur est ainsi capable de contrôler efficacement l'exécution du procédé d'enrôlement biométrique et ce malgré l'absence de, ou les limites de l'interface utilisateur à sa disposition que ce soit sur la carte à puce ou sur le dispositif périphérique. Dans un cas par exemple où ni la carte à puce DV1 ni le dispositif périphérie DV2 ne dispose d'une interface d'entrée (du type bouton ou autre), l'utilisateur peut malgré tout contrôler le procédé d'enrôlement biométrique en causant des couplages/découplages successifs.

Selon un exemple particulier, chaque enrôlement biométrique S2 (**figure 3**) et chaque vérification d'enrôlement biométrique S20 sont déclenchés sur détection d'un nouveau couplage de la carte à puce DV1 avec le dispositif périphérique DV2.

Selon un exemple particulier, en cas d'interruption de l'enrôlement biométrique S2 (par exemple suite à un découplage entre la carte à puce DV1 et le dispositif périphérique DV2), toutes éventuelles données biométriques de référence DREF présentes dans la mémoire MR2 sont supprimées et le processus itératif reprend à zéro pour réaliser un nouvel enrôlement sur détection d'un nouveau couplage entre la carte à puce DV1 et le dispositif périphérique DV2.

Par ailleurs, dans le cas décrit ci-avant où le capteur biométrique SR1 est extérieur au module de traitement 4, chaque empreinte biométrique FP acquise au moyen du capteur biométrique SR1 peut être transmise par le processeur principal 2 au module de traitement 4. Le module de vérification MD4 peut alors être configuré pour vérifier les données biométriques de référence DREF de chaque première empreinte digitale FP1 acquise en S4 (**figure 3**) en réponse à une commande de vérification respective (par exemple de type VERIFY conforme au standard EMV) générée et envoyée par le processeur principal 2. Dans ce cas, le processeur principal 2 peut générer et envoyer une commande VERIFY respective pour chaque empreinte digitale FP1 enrôlée qu'il faut vérifier. Chaque commande VERIFY comprend par exemple une deuxième empreinte biométrique FP2 acquise en S22 (**figure 3**) et qui doit être traitée par le module de vérification MD4 pour déterminer si la partie correspondante des données biométriques de référence DREF est valide ou non.

D'autre part, comme décrit précédemment, les étapes S2-S40 (**figure 3**) du procédé d'enrôlement biométrique peuvent être répétées itérativement dans le cas où toutes les données biométriques de référence DREF ne sont pas déterminées comme étant valides lors de l'étape S20 de vérification d'enrôlement biométrique de la première itération i.

Selon un exemple particulier, le processus itératif est terminé si N itérations ont été réalisées sans que les données de référence enregistrées dans la mémoire n'aient été déterminées comme étant valides, N étant un entier au moins égal à 2. Le module de contrôle MD6 peut être configuré pour suivre le nombre d'itérations réalisés par le module de traitement 4 au cours du temps. Pour ce faire, le module de contrôle peut enregistrer et mettre à jour un compteur CT représentatif du nombre d'itérations réalisées depuis l'initiation du processus d'enrôlement biométrique (depuis la première itération). Le module de contrôle MD6 peut ainsi mettre fin au processus itératif lorsque le nombre seuil d'itération N est atteint, de sorte à ce que le nombre d'itérations n'excède pas N.

Ainsi, comme représenté en **figure 5****,** si au moins une partie des données biométriques de référence DREF est déterminée en S30 comme n'étant pas valide, alors le module de contrôle MD6 réalise une étape S50 pour déterminer si la valeur du compteur CT a atteint la valeur seuil N. Dans l'affirmative, le module de contrôle MD6 termine le processus d'enrôlement biométrique. Si, en revanche, la valeur du compteur CT n'a pas encore atteint la valeur seuil N (CT < N), alors le module de contrôle MD6 met à jour le compteur CT (en l'incrémentant dans cet exemple), réalise l'étape de suppression S40 et déclenche une nouvelle itération du processus itératif.

En fixant le nombre maximal d'itération à un nombre N donné (N=3 par exemple), il est ainsi possible de limiter les risques sécuritaires dans les cas où un nombre trop important d'échecs de l'enrôlement biométrique est détecté.

A noter que le module de contrôle MD6 peut mettre fin au processus d'enrôlement biométrique de différentes manières (notamment dans le cas où le résultat est positif à l'étape S50, **figure 5**). Ainsi, le module de contrôle MD6 peut par exemple terminer le processus d'enrôlement biométrique en supprimant toutes les données biométriques de référence DREF enregistrées dans la mémoire MR2 et en forçant la mise à l'état ST3. Comme déjà décrit précédemment, la fonction d'enrôlement F1 est alors bloquée et l'authentification biométrique n'est plus possible puisqu'aucune empreinte de référence n'est enregistrée dans la mémoire MR2. (Exemple évoqué dans le commentaire p21).

Selon une variante, il est mis fin au processus d'enrôlement biométrique en ne supprimant que la ou les parties non valides des données biométriques de référence DREF enregistrées dans la mémoire MR2. La fonction d'enrôlement F1 est bloquée de sorte que le module d'authentification MD8 ne peut réaliser des authentifications biométriques uniquement avec les données biométriques de référence DREF valides, ce qui peut aboutir à des résultats moins fiables que si toutes les données biométriques DREF avaient été jugées valides à l'étape S20 de vérification d'enrôlement.

Selon une variante, il est mis fin au processus d'enrôlement biométrique en modifiant la configuration de l'application APP1 pour changer son comportement d'une façon appropriée. Ainsi, sur détection en S50 (**figure 5**) que le processus itératif est terminé, le module de contrôle MD6 modifie la configuration d'au moins une fonction mise en oeuvre par la carte à puce DV1 (à savoir au moins une fonction mise en oeuvre par l'application APP1 dans cet exemple) de sorte qu'au moins un paramètre configurant ladite au moins une fonction soit modifié. Cette modification de configuration a par exemple pour effet que la ou les fonctions concernées sont exécutées par la carte à puce DV1 en mode dégradé (avec un ou des paramètres modifiées augmentant la sécurité de la ou les fonctions). Par exemple, dans le cadre d'une application de paiement, le module de contrôle MD6 diminue le montant maximum possible pour les transactions validées par authentification biométrique. D'autres implémentations sont toutefois possibles.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé d'enrôlement biométrique mis en oeuvre dans une carte à puce (DV1) comprenant un capteur biométrique (SR1), un module d'enrôlement (MD2) et une mémoire (MR2), le procédé comprenant un processus itératif comprenant au cours d'au moins une itération courante :
- enrôlement biométrique (S2) par le module d'enrôlement mettant en oeuvre une fonction d'enrôlement biométrique (F1), comprenant :
∘ acquisition (S4) d'au moins une première empreinte biométrique (FP1) au moyen du capteur biométrique ; et
∘ enregistrement (S8), en tant que données biométriques de référence (DREF), dans la mémoire, de premières données biométriques (DT1) obtenues à partir de chaque première empreinte biométrique acquise ;
- vérification (S20) d'enrôlement biométrique, comprenant :
∘ acquisition (S22) d'au moins une deuxième empreinte biométrique (FP2) au moyen du capteur biométrique ; et
∘ vérification (S26) de la validité des données biométriques de référence par comparaison avec des deuxièmes données biométriques obtenues à partir de chaque deuxième empreinte biométrique acquise ;
- si les données biométriques de référence sont déterminées comme étant valides, blocage (S34) du module d'enrôlement de sorte à inhiber la fonction d'enrôlement biométrique pour empêcher tout enrôlement biométrique ultérieur, les données biométriques de référence étant conservées (S36) dans la mémoire pour permettre ultérieurement une authentification biométrique ; et
- si au moins une partie des données biométriques de référence est déterminée comme n'étant pas valide, suppression (S40) d'au moins ladite partie non valide des données biométriques de référence et déclenchement d'un nouvel enrôlement biométrique pour remplacer les données biométriques supprimées par de nouvelles données biométriques obtenues à partir d'au moins une nouvelle empreinte biométrique ;
dans lequel la carte à puce coopère avec un dispositif périphérique (DV2) comprenant une source d'alimentation interne et une interface utilisateur, chaque enrôlement biométrique et chaque vérification d'enrôlement biométrique étant déclenchés sur détection d'un nouveau couplage de la carte à puce avec le dispositif périphérique.

2. Procédé selon la revendication 1, dans lequel le module d'enrôlement étant apte à commuter depuis un état activé, dans lequel il met en oeuvre la fonction d'enrôlement biométrique (F1) pour réaliser un enrôlement biométrique, vers un état bloqué dans lequel ladite fonction d'enrôlement biométrique est bloquée.

3. Procédé selon la revendication 1 ou 2, dans lequel lors de la vérification d'enrôlement biométrique, les données biométriques de référence (DREF) correspondant à chaque première empreinte biométrique (FP1) sont comparées avec des deuxièmes données biométriques (DT2) correspondant à une deuxième empreinte biométrique (FP2) respective,
dans lequel chaque partie des données biométriques de référence coïncidant avec une partie au moins des deuxièmes données biométriques est déterminée comme étant valide.

4. Procédé selon l'une quelconque des revendications 1 à 3, le procédé comprenant en outre, après le blocage du module d'enrôlement, une authentification biométrique (S38) comprenant :
- acquisition d'au moins une empreinte biométrique ultérieure au moyen du capteur biométrique ;
- obtention, pour chaque empreinte biométrique ultérieure, de données biométriques ultérieures respectives qui sont représentatives d'un utilisateur ; et
- vérification de ladite au moins une empreinte biométrique ultérieure par comparaison des données biométriques ultérieures avec les données biométriques de référence.

5. Procédé selon l'une quelconque des revendications 1 à 4, dans lequel si au moins une partie des données biométriques de référence (DREF) est déterminée comme n'étant pas valide lors de ladite vérification d'enrôlement biométrique, toutes les données biométriques de référence sont supprimées et un nouvel enrôlement biométrique est déclenché au cours d'une nouvelle itération du processus itératif pour remplacer les données biométriques supprimées par de nouvelles données biométriques obtenues à partir d'au moins une nouvelle empreinte biométrique.

6. Procédé selon l'une quelconque des revendications 1 à 5, dans lequel si seulement une partie des données biométriques de référence (DREF) est déterminée comme n'étant pas valide lors de ladite vérification d'enrôlement biométrique, la partie non valide des données biométriques de référence est supprimée (S40) de sorte à être remplacée lors d'un nouvel enrôlement biométrique au cours d'une nouvelle itération du processus itératif, tandis que la partie valide des données biométriques de référence est conservée dans la mémoire pour permettre ultérieurement une authentification biométrique.

7. Procédé selon l'une quelconque des revendications 1 à 6, dans lequel si une commande prédéfinie est reçue par la carte à puce après exécution de l'enrôlement biométriques mais avant achèvement d'au moins l'un parmi :
- la vérification d'enrôlement biométrique ; et
- ledit blocage du module d'enrôlement ;
alors la carte à puce (DV1) supprime toutes les données biométriques de référence (DREF) enregistrées dans la mémoire et déclenche un nouvel enrôlement biométrique au cours d'une nouvelle itération du processus itératif pour remplacer les données biométriques de référence supprimées par de nouvelles données biométriques obtenues à partir d'au moins une nouvelle empreinte biométrique.

8. Procédé selon la revendication 7, dans lequel la commande prédéfinie est une quelconque commande ADPU pour traiter une transaction.

9. Procédé selon l'une quelconque des revendications 1 à 8, dans lequel la carte à puce comprend en outre :
- un module de traitement (4) configuré pour réaliser l'enregistrement (S8), en tant que données biométriques de référence, dans la mémoire, des premières données biométriques (DT1) obtenues et pour réaliser la vérification (S26) de la validité des données biométriques de référence ; et
- un processeur (2), ledit processeur et le capteur biométrique étant extérieurs au module de traitement ;
chaque empreinte biométrique acquise au moyen du capteur biométrique étant traitée par le processeur pour obtenir des données biométriques correspondantes qui sont transmises au module de traitement ;
la vérification d'enrôlement biométrique étant réalisée par un module de vérification compris dans la carte à puce, le module de vérification vérifiant les données biométriques de référence de chaque première empreinte biométrique en réponse à une commande de vérification respective générée et envoyée par le processeur.

10. Procédé selon la revendication 9, dans lequel le module de traitement est un élément sécurisé.

11. Procédé selon l'une quelconque des revendications 1 à 10, dans lequel le processus itératif est poursuivi tant que les données biométriques de référence (DREF) enregistrées dans la mémoire (MR2) n'ont pas été validées.

12. Procédé selon l'une quelconque des revendications 1 à 11, dans lequel le processus itératif est terminé si N itérations ont été réalisées sans que les données de référence enregistrées dans la mémoire n'aient été déterminées comme étant valides, N étant un entier au moins égal à 2.

13. Procédé selon la revendication 12, dans lequel si le processus itératif est terminé sur détection que N itérations ont été réalisées sans que les données de référence enregistrées dans la mémoire n'aient été déterminées comme étant valides, le procédé comprend en outre :
modification de la configuration d'au moins une fonction mise en oeuvre par la carte à puce (DV1) de sorte qu'au moins un paramètre configurant ladite au moins une fonction soit modifié.

14. Programme d'ordinateur (PG1) comportant des instructions pour l'exécution des étapes d'un procédé d'enrôlement biométrique selon l'une quelconque des revendications 1 à 13 lorsque ledit programme est exécuté par un ordinateur.

15. Carte à puce (DV1) comprenant :
- un capteur biométrique (SR1) ;
- une mémoire (MR2) ;
- un module d'enrôlement (MD2) configuré pour réaliser un enrôlement biométrique mettant en oeuvre une fonction d'enrôlement biométrique (F1), ledit module d'enrôlement comprenant :
∘ acquisition d'au moins une première empreinte biométrique (FP1) au moyen du capteur biométrique ; et
∘ enregistrement, en tant que données biométriques de référence (DREF), dans la mémoire, de premières données biométriques (DT1) obtenues à partir de chaque première empreinte biométrique acquise ;
- un module de vérification (MD4) configuré pour réaliser une vérification d'enrôlement biométrique comprenant :
∘ acquisition d'au moins une deuxième empreinte biométrique au moyen du capteur biométrique ; et
∘ vérification de la validité des données biométriques de référence par comparaison avec des deuxièmes données biométriques obtenues à partir de chaque deuxième empreinte biométrique acquise ;
- un module de contrôle (MD6) configuré pour :
∘ si les données biométriques de référence sont déterminées comme étant valides, bloquer le module d'enrôlement de sorte à inhiber la fonction d'enrôlement biométrique pour empêcher tout enrôlement biométrique ultérieur, et conserver les données biométriques de référence dans la mémoire pour permettre ultérieurement une authentification biométrique ; et
∘ si au moins une partie des données biométriques de référence est déterminée comme n'étant pas valide, supprimer au moins ladite partie non valide des données biométriques de référence et déclencher un nouvel enrôlement biométrique pour remplacer les données biométriques supprimées par de nouvelles données biométriques obtenues à partir d'au moins une nouvelle empreinte biométrique,
dans lequel la carte à puce est configurée pour coopérer avec un dispositif périphérique (DV2) comprenant une source d'alimentation interne et une interface utilisateur, chaque enrôlement biométrique et chaque vérification d'enrôlement biométrique étant déclenchés sur détection d'un nouveau couplage de la carte à puce avec le dispositif périphérique.

## Patentansprüche

1. Verfahren zur biometrischen Registrierung, das in einer Chipkarte (DV1) durchgeführt wird, die einen biometrischen Sensor (SR1), ein Registrierungsmodul (MD2) und einen Speicher (MR2) umfasst, wobei das Verfahren einen iterativen Prozess umfasst, der während mindestens einer laufenden Iteration umfasst:
- biometrische Registrierung (S2) durch das Registrierungsmodul, das eine Funktion zur biometrischen Registrierung (F1) durchführt, umfassend:
∘ Erfassen (S4) mindestens eines ersten biometrischen Fingerabdrucks (FP1) mittels des biometrischen Sensors; und
∘ Speichern (S8), als biometrische Referenzdaten (DREF), in dem Speicher, von ersten biometrischen Daten (DT1), die ausgehend von jedem erfassten ersten biometrischen Fingerabdruck erhalten werden;
- Überprüfen (S20) einer biometrischen Registrierung, umfassend:
∘ Erfassen (S22) mindestens eines zweiten biometrischen Fingerabdrucks (FP2) mittels des biometrischen Sensors; und
∘ Überprüfen (S26) der Gültigkeit der biometrischen Referenzdaten durch Vergleichen mit zweiten biometrischen Daten, die ausgehend von jedem erfassten zweiten biometrischen Fingerabdruck erhalten werden;
- wenn die biometrischen Referenzdaten als gültig bestimmt werden, Blockieren (S34) des Registrierungsmoduls, so dass die Funktion zur biometrischen Registrierung deaktiviert wird, um jede weitere biometrische Registrierung zu verhindern, wobei die biometrischen Referenzdaten in dem Speicher behalten werden (S36), um später eine biometrische Authentifizierung zu ermöglichen; und
- wenn mindestens ein Teil der biometrischen Referenzdaten als nicht gültig bestimmt wird, Löschen (S40) mindestens des nicht gültigen Teils der biometrischen Referenzdaten und Auslösen einer neuen biometrischen Registrierung, um die gelöschten biometrischen Daten durch neue biometrische Daten zu ersetzen, die ausgehend von mindestens einem neuen biometrischen Fingerabdruck erhalten werden;
wobei die Chipkarte mit einer Peripherieeinrichtung (DV2) zusammenwirkt, die eine interne Versorgungsquelle und eine Benutzerschnittstelle umfasst, wobei jede biometrische Registrierung und jede Überprüfung einer biometrischen Registrierung bei Erkennung einer neuen Kopplung der Chipkarte mit der Peripherieeinrichtung ausgelöst werden.

2. Verfahren nach Anspruch 1, wobei das Registrierungsmodul in der Lage ist, von einem aktivierten Zustand, in dem es die Funktion zur biometrischen Registrierung (F1) durchführt, um eine biometrische Registrierung auszuführen, in einen blockierten Zustand umzuschalten, in dem die Funktion zur biometrischen Registrierung blockiert ist.

3. Verfahren nach Anspruch 1 oder 2, wobei bei der Überprüfung einer biometrischen Registrierung die biometrischen Referenzdaten (DREF), die jedem ersten biometrischen Fingerabdruck (FP1) entsprechen, mit zweiten biometrischen Daten (DT2) verglichen werden, die einem jeweiligen zweiten biometrischen Fingerabdruck (FP2) entsprechen,
wobei jeder Teil der biometrischen Referenzdaten, der mit mindestens einem Teil der zweiten biometrischen Daten übereinstimmt, als gültig bestimmt wird.

4. Verfahren nach einem der Ansprüche 1 bis 3, wobei das Verfahren ferner, nach dem Blockieren des Registrierungsmoduls, eine biometrische Authentifizierung (S38) umfasst, umfassend:
- Erfassen mindestens eines weiteren biometrischen Fingerabdrucks mittels des biometrischen Sensors;
- Erhalten, für jeden weiteren biometrischen Fingerabdruck, von jeweiligen weiteren biometrischen Daten, die für einen Benutzer repräsentativ sind; und
- Überprüfen des mindestens einen weiteren biometrischen Fingerabdrucks durch Vergleich der weiteren biometrischen Daten mit den biometrischen Referenzdaten.

5. Verfahren nach einem der Ansprüche 1 bis 4, wobei, wenn mindestens ein Teil der biometrischen Referenzdaten (DREF) bei der Überprüfung einer biometrischen Registrierung als nicht gültig bestimmt wird, alle biometrischen Referenzdaten gelöscht werden und eine neue biometrische Registrierung während einer neuen Iteration des iterativen Prozesses ausgelöst wird, um die gelöschten biometrischen Daten durch neue biometrische Daten zu ersetzen, die ausgehend von mindestens einem neuen biometrischen Fingerabdruck erhalten werden.

6. Verfahren nach einem der Ansprüche 1 bis 5, wobei, wenn nur ein Teil der biometrischen Referenzdaten (DREF) bei der Überprüfung einer biometrischen Registrierung als nicht gültig bestimmt wird, der nicht gültige Teil der biometrischen Referenzdaten gelöscht wird (S40), so dass er bei einer neuen biometrischen Registrierung während einer neuen Iteration des iterativen Prozesses ersetzt wird, während der gültige Teil der biometrischen Referenzdaten in dem Speicher behalten wird, um später eine biometrische Authentifizierung zu ermöglichen.

7. Verfahren nach einem der Ansprüche 1 bis 6, wobei, wenn ein vordefinierter Befehl von der Chipkarte nach Ausführung der biometrischen Registrierung erhalten wird, aber vor Abschluss mindestens einer unter:
- der Überprüfung einer biometrischen Registrierung; und
- der Blockierung des Registrierungsmoduls;
die Chipkarte (DV1) alle in dem Speicher gespeicherten biometrischen Referenzdaten (DREF) löscht und eine neue biometrische Registrierung während einer neuen Iteration des iterativen Prozesses auslöst, um die gelöschten biometrischen Referenzdaten durch neue biometrische Daten zu ersetzen, die ausgehend von mindestens einem neuen biometrischen Fingerabdruck erhalten werden.

8. Verfahren nach Anspruch 7, wobei der vordefinierte Befehl ein beliebiger ADPU-Befehl zum Verarbeiten einer Transaktion ist.

9. Verfahren nach einem der Ansprüche 1 bis 8, wobei die Chipkarte ferner umfasst:
- ein Verarbeitungsmodul (4), das dazu ausgestaltet ist, das Speichern, als biometrische Referenzdaten, in dem Speicher, der erhaltenen ersten biometrischen Daten (DT1) auszuführen und die Überprüfung (S26) der Gültigkeit der biometrischen Referenzdaten auszuführen; und
- einen Prozessor (2), wobei der Prozessor und der biometrische Sensor außerhalb des Verarbeitungsmoduls sind;
wobei jeder mittels des biometrischen Sensors erfasste biometrische Fingerabdruck von dem Prozessor verarbeitet wird, um entsprechende biometrische Daten zu erhalten, die an das Verarbeitungsmodul übermittelt werden;
wobei die Überprüfung einer biometrischen Registrierung durch ein in der Chipkarte enthaltenes Überprüfungsmodul ausgeführt wird, wobei das Überprüfungsmodul die biometrischen Referenzdaten jedes ersten biometrischen Fingerabdrucks als Reaktion auf einen jeweiligen Überprüfungsbefehl überprüft, der von dem Prozessor erzeugt und versandt wird.

10. Verfahren nach Anspruch 9, wobei das Verarbeitungsmodul ein gesichertes Element ist.

11. Verfahren nach einem der Ansprüche 1 bis 10, wobei der iterative Prozess fortgesetzt wird, solange die in dem Speicher (MR2) gespeicherten biometrischen Referenzdaten (DREF) nicht validiert worden sind.

12. Verfahren nach einem der Ansprüche 1 bis 11, wobei der iterative Prozess beendet wird, wenn N Iterationen ausgeführt worden sind, ohne dass die in dem Speicher gespeicherten Referenzdaten als gültig bestimmt worden sind, wobei N eine ganze Zahl von mindestens 2 ist.

13. Verfahren nach Anspruch 12, wobei der iterative Prozess bei Erkennung, dass N Iterationen ausgeführt worden sind, ohne dass die in dem Speicher gespeicherten Referenzdaten als gültig bestimmt worden sind, beendet wird, wobei das Verfahren ferner umfasst:
Ändern der Konfiguration mindestens einer von der Chipkarte (DV1) durchgeführten Funktion, so dass mindestens ein Parameter, der die mindestens eine Funktion konfiguriert, geändert wird.

14. Computerprogramm (PG1), das Anweisungen beinhaltet, die bei der Ausführung des Programms durch einen Computer die Schritte eines Verfahrens zur biometrischen Registrierung nach einem der Ansprüche 1 bis 13 ausführen.

15. Chipkarte (DV1), umfassend:
- einen biometrischen Sensor (SR1);
- einen Speicher (MR2);
- ein Registrierungsmodul (MD2), das dazu ausgestaltet ist, eine biometrische Registrierung auszuführen, die eine Funktion zur biometrischen Registrierung (F1) durchführt, wobei das Registrierungsmodul umfasst:
∘ Erfassen mindestens eines ersten biometrischen Fingerabdrucks (FP1) mittels des biometrischen Sensors; und
∘ Speichern, als biometrische Referenzdaten (DREF), in dem Speicher, von ersten biometrischen Daten (DT1), die ausgehend von jedem erfassten ersten biometrischen Fingerabdruck erhalten werden;
- ein Überprüfungsmodul (MD4), das dazu ausgestaltet ist, eine Überprüfung einer biometrischen Registrierung auszuführen, umfassend:
∘ Erfassen mindestens eines zweiten biometrischen Fingerabdrucks mittels des biometrischen Sensors; und
∘ Überprüfen der Gültigkeit der biometrischen Referenzdaten durch Vergleichen mit zweiten biometrischen Daten, die ausgehend von jedem erfassten zweiten biometrischen Fingerabdruck erhalten werden;
- ein Steuerungsmodul (MD6), das dazu ausgestaltet ist:
∘ wenn die biometrischen Referenzdaten als gültig bestimmt werden, das Registrierungsmodul zu blockieren, so dass die Funktion zur biometrischen Registrierung deaktiviert wird, um jede weitere biometrische Registrierung zu verhindern, und die biometrischen Referenzdaten in dem Speicher zu behalten, um später eine biometrische Authentifizierung zu ermöglichen; und
∘ wenn mindestens ein Teil der biometrischen Referenzdaten als nicht gültig bestimmt wird, mindestens den nicht gültigen Teil der biometrischen Referenzdaten zu löschen und eine neue biometrische Registrierung auszulösen, um die gelöschten biometrischen Daten durch neue biometrische Daten zu ersetzen, die ausgehend von mindestens einem neuen biometrischen Fingerabdruck erhalten werden,
wobei die Chipkarte dazu ausgestaltet ist, mit einer Peripherieeinrichtung (DV2) zusammenzuwirken, die eine interne Versorgungsquelle und eine Benutzerschnittstelle umfasst, wobei jede biometrische Registrierung und jede Überprüfung einer biometrischen Registrierung bei Erkennung einer neuen Kopplung der Chipkarte mit der Peripherieeinrichtung ausgelöst werden.

## Claims

1. Biometric-enrolment method implemented in a chip card (DV1) comprising a biometric sensor (SR1), an enrolment module (MD2) and a memory (MR2), the method comprising an iterative process comprising, during at least one current iteration:
- biometric enrolment (S2) by the enrolment module implementing a biometric-enrolment function (F1), comprising:
∘ acquiring (S4) at least one first biometric print (FP1) by means of the biometric sensor; and
∘ recording (S8), by way of reference biometric data (DREF), in the memory, first biometric data (DT1) obtained from each first biometric print acquired;
- biometric-enrolment verification (S20), comprising:
∘ acquiring (S22) at least one second biometric print (FP2) by means of the biometric sensor; and
∘ verifying (S26) the validity of the reference biometric data by comparing them with the second biometric data obtained from each second biometric print acquired;
- if the reference biometric data are determined to be valid, blockage (S34) of the enrolment module so as to inhibit the biometric-enrolment function with a view to preventing any subsequent biometric enrolment, the reference biometric data being stored (S36) in the memory with a view to subsequently allowing a biometric authentication; and
- if at least one portion of the reference biometric data is determined to be invalid, deletion (S40) of at least said invalid portion of the reference biometric data and triggering of a new biometric enrolment with a view to replacing the deleted biometric data with new biometric data obtained from at least one new biometric print;
wherein the chip card interacts with a peripheral device (DV2) comprising an internal power source and a user interface, each biometric enrolment and each biometric-enrolment verification being triggered on detection of the chip card being coupled anew to the peripheral device.

2. Method according to Claim 1, wherein the enrolment module is capable of switching from an activated state, in which it implements the biometric-enrolment function (F1) with a view to performing a biometric enrolment, to a blocked state in which said biometric-enrolment function is blocked.

3. Method according to Claim 1 or 2, wherein, during the biometric-enrolment verification, the reference biometric data (DREF) corresponding to each first biometric print (FP1) are compared with second biometric data (DT2) corresponding to a respective second biometric print (FP2),
wherein each portion of the reference biometric data coinciding with at least one portion of the second biometric data is determined to be valid.

4. Method according to any one of Claims 1 to 3, the method further comprising, after blockage of the enrolment module, a biometric authentication (S38) comprising:
- acquiring at least one subsequent biometric print by means of the biometric sensor;
- obtaining, for each subsequent biometric print, respective subsequent biometric data that are representative of a user; and
- verifying said at least one subsequent biometric print by comparing subsequent biometric data with the reference biometric data.

5. Method according to any one of Claims 1 to 4, wherein, if at least one portion of the reference biometric data (DREF) is determined to be invalid in said biometric-enrolment verification, all the reference biometric data are deleted and a new biometric enrolment is triggered during a new iteration of the iterative process with a view to replacing the deleted biometric data with new biometric data obtained from at least one new biometric print.

6. Method according to any one of Claims 1 to 5, wherein, if only one portion of the reference biometric data (DREF) is determined to be invalid in said biometric-enrolment verification, the invalid portion of the reference biometric data is deleted (S40) so as to be replaced in a new biometric enrolment during a new iteration of the iterative process, whereas the valid portion of the reference biometric data is stored in the memory with a view to subsequently allowing a biometric authentication.

7. Method according to any one of Claims 1 to 6, wherein if a predefined command is received by the chip card after execution of the biometric enrolment but before completion of at least one among:
- the biometric-enrolment verification; and
- said blockage of the enrolment module;
then the chip card (DV1) deletes all the reference biometric data (DREF) recorded in the memory and triggers a new biometric enrolment during a new iteration of the iterative process with a view to replacing the deleted reference biometric data with new biometric data obtained from at least one new biometric print.

8. Method according to Claim 7, wherein the predefined command is any ADPU command for processing a transaction.

9. Method according to any one of Claims 1 to 8, wherein the chip card further comprises:
- a processing module (4) configured to record (S8), by way of reference biometric data, in the memory, the obtained first biometric data (DT1) and to verify (S26) the validity of the reference biometric data; and
- a processor (2), said processor and the biometric sensor being exterior to the processing module;
each biometric print acquired by means of the biometric sensor being processed by the processor to obtain corresponding biometric data that are transmitted to the processing module;
the biometric-enrolment verification being performed by a verification module comprised in the chip card, the verification module verifying the reference biometric data of each first biometric print in response to a respective verification command generated and sent by the processor.

10. Method according to Claim 9, wherein the processing module is a secure element.

11. Method according to any one of Claims 1 to 10, wherein the iterative process is continued until the reference biometric data (DREF) recorded in the memory (MR2) are validated.

12. Method according to any one of Claims 1 to 11, wherein the iterative process is terminated if N iterations have been performed without the reference data recorded in the memory being determined to be valid, N being an integer at least equal to 2.

13. Method according to Claim 12, wherein, if the iterative process is terminated on detection that N iterations have been performed without the reference data recorded in the memory being determined to be valid, the method further comprises:
modifying the configuration of at least one function implemented by the chip card (DV1) so that at least one parameter configuring said at least one function is modified.

14. Computer program (PG1) comprising instructions for executing the steps of a biometric-enrolment method according to any one of Claims 1 to 13 when said program is executed by a computer.

15. Chip card (DV1) comprising:
- a biometric sensor (SR1);
- a memory (MR2);
- an enrolment module (MD2) configured to perform a biometric enrolment implementing a biometric-enrolment function (F1), said enrolment module comprising:
∘ acquiring at least one first biometric print (FP1) by means of the biometric sensor; and
∘ recording, by way of reference biometric data (DREF), in the memory, first biometric data (DT1) obtained from each first biometric print acquired;
- a verification module (MD4) configured to perform a biometric-enrolment verification comprising:
∘ acquiring at least one second biometric print by means of the biometric sensor; and
∘ verifying the validity of the reference biometric data by comparing them with the second biometric data obtained from each second biometric print acquired;
- a control module (MD6) configured to:
∘ if the reference biometric data are determined to be valid, block the enrolment module so as to inhibit the biometric-enrolment function with a view to preventing any subsequent biometric enrolment, and store the reference biometric data in the memory with a view to subsequently allowing a biometric authentication; and
∘ if at least one portion of the reference biometric data is determined to be invalid, delete at least said invalid portion of the reference biometric data and trigger a new biometric enrolment with a view to replacing the deleted biometric data with new biometric data obtained from at least one new biometric print, wherein the chip card is configured to interact with a peripheral device (DV2) comprising an internal power source and a user interface, each biometric enrolment and each biometric-enrolment verification being triggered on detection of the chip card being coupled anew to the peripheral device.
